# EUROPÄISCHE PATENTSCHRIFT

(11) **EP 3 701 157 B1**
(45) Veröffentlichungstag und Bekanntmachung des Hinweises auf die Patenterteilung: **15.03.2023**
(21) Anmeldenummer: 18789346.6
(22) Anmeldetag: 11.10.2018
(51) Int. Cl.: F16B 37/04, B29C 70/68

(54) **HALBZEUG FÜR DAS HERSTELLEN EINES FASERVERSTÄRKTEN, EIN BEFESTIGUNGSLOCH ODER EINEN BEFESTIGUNGSVORSPRUNG AUFWEISENDEN VERBUNDELEMENTS, VERBUNDELEMENT UND VERFAHREN ZUM HERSTELLEN EINES VERBUNDELEMENTS**
SEMIFINISHED PRODUCT FOR PRODUCING A FIBER-REINFORCED COMPOSITE ELEMENT HAVING A FASTENING HOLE OR A FASTENING PROTRUSION, COMPOSITE ELEMENT AND METHOD FOR PRODUCING A COMPOSITE ELEMENT
PRODUIT SEMI-FINI POUR LA FABRICATION D'UN ÉLÉMENT COMPOSITE RENFORCÉ DE FIBRES PRÉSENTANT UN TROU DE FIXATION OU UNE PARTIE SAILLANTE DE FIXATION, ÉLÉMENT COMPOSITE ET PROCÉDÉ DE FABRICATION D'UN ÉLÉMENT COMPOSITE

(30) Priorität: 27.10.2017 DE 102017010010
(43) Veröffentlichungstag der Anmeldung: 02.09.2020
(73) Patentinhaber: A Raymond Et Cie, 38000 Grenoble (FR)
(72) Erfinder: GRETHER, Urs, 79400 Kandern (DE); RUFFING, Till, 79725 Laufenburg (Baden) (DE); GRATHWOL, Thomas, 79418 Schliengen (DE); ROHLOFF, Yannick, 79618 Rheinfelden (DE); RICHWALSKY, Jens, 79585 Steinen (DE)
(74) Vertreter: König Szynka Tilmann von Renesse Patentanwälte Partnerschaft mbB Düsseldorf
(86) Internationale Anmeldenummer: PCT/EP2018/077733
(87) Internationale Veröffentlichungsnummer: WO 2019/081219

(56) Entgegenhaltungen:
- EP-A1- 3 332 945
- WO-A1-2013/177298
- DE-A1-102012 108 734
- DE-A1-102015 218 593
- DE-A1-102016 004 722
- DE-A1-102016 202 744

## Beschreibung

Die Erfindung betrifft ein Halbzeug für das Herstellen eines faserverstärkten, ein Befestigungsloch oder einen Befestigungsvorsprung aufweisenden Verbundelements sowie ein Verbundelement mit in einem ausgehärteten Harz eingebundenen Fasern und einem ebenfalls in dem Harz eingebundenen Einsatzstück sowie ein Verfahren zum Herstellen eines solchen Verbundelements.

Aus dem Stand der Technik ist es bekannt, Vorrichtungen, insbesondere Fahrzeuge, beispielsweise Boote, Flugzeuge oder Hubschrauber, vor allem aber Landfahrzeuge, wie beispielsweise Kraftfahrzeuge oder Fahrräder zumindest zum Teil sowohl hinsichtlich von Anbaustücken, zunehmend aber auch für die Grundkonstruktion, beispielsweise für eine Rahmenkonstruktion unter Einsatz von Verbundelementen herzustellen, die in einem Harz eingebundene Fasern aufweisen. Möchte man bei derartigen Verbundelementen ein weiteres Bauteil mit dem Verbundelement befestigen, so besteht dem Grunde nach die Möglichkeit, eine Schraube oder ein Niet in das Verbundelement mit seinem ausgehärteten Harz und den in dem ausgehärteten Harz eingebundenen Fasern einzubringen. Das Einbringen einer Schraube oder eines Bolzens in ein Verbundelement mit ausgehärtetem Harz führt jedoch zu einer mechanischen Beschädigung des Verbundelements. Diese mechanische Beschädigung kann im Einsatz des Verbundelements zu einer Schädigung führen. Alternativ ist es denkbar, das mit dem Verbundelement zu verbindende Bauteil mit dem Verbundelement zu verkleben. Ein Verkleben birgt jedoch gegenüber dem Einsatz von Schrauben den Nachteil, dass das Bauteil nicht zerstörungsfrei von dem Verbundelement entfernt werden kann. Wird beispielsweise ein Kotflügel eines Fahrzeugs (ein Beispiel für ein Bauteil) an eine Rahmenkonstruktion eines Kraftfahrzeugs (ein Beispiel für ein erfindungsgemäßes Verbundelement) angeklebt, so kann nach einem leichten Unfall, bei dem nur der Kotflügel ausgetauscht werden müsste, dieser nur durch aufwendige Arbeiten von dem Rahmen gelöst und durch einen neuen Kotflügel ersetzt werden.

Aus DE 10 2015 218 593 A1, DE 10 2016 202 744 A1, DE 10 2016 004 722 A1, WO 2013/177298 A1 und DE 10 2012 108 734 A1 ist ein Halbzeug nach dem Oberbegriff des Anspruchs 2 bekannt.

Vor diesem Hintergrund lag der Erfindung die Aufgabe zugrunde, ein Verbundelement mit in einem ausgehärteten Harz eingebundenen Fasern sowie ein Verfahren zu dessen Herstellung vorzuschlagen, das ein leichtes Verbinden von Bauteilen mit dem Verbundelement erlaubt, zugleich jedoch keine mechanischen Vorschädigungen des Verbundelements bedingt, wie dies beim nachträglichen Einbringen einer Schraube in ein Verbundelement mit ausgehärtetem Harz möglicherweise der Fall ist.

Die Erfindung geht von dem Grundgedanken aus, während der Herstellung des Verbundelements ein Einsatzstück mit einzubetten, das dann beim Aushärten des Harzes wie auch die Fasern in das Harz eingebunden wird. Damit vermeidet die Erfindung die Notwendigkeit, nach dem Aushärten des Harzes Befestigungselemente wie Schrauben oder Bolzen in das Verbundelement einzutreiben. Zugleich bietet die Verwendung eines in den ausgehärteten Harz eingebundenen Einsatzstücks die Möglichkeit, mit diesem Einsatzstück ein Befestigungsloch oder einen Befestigungsvorsprung in bzw. an den Verbundelement auszubilden, das später für das Herstellen einer lösbaren Verbindung mit einem an dem Verbundelement zu befestigenden Bauteil verwendet werden kann.

Die Erfindung kann bereits durch das Bereitstellen eines Halbzeug, das für das Herstellen eines faserverstärkten, ein Befestigungsloch oder einen Befestigungsvorsprung aufweisenden Verbundelements geeignet ist, gemäß Anspruch 2 umgesetzt werden. Bei einem solchen Halbzeug handelt es sich um die kleinste, vertriebsfähige Einheit, mit der die Erfindung umgesetzt werden kann. Betrachtet man die derzeitigen Herstellungsstufen von faserverstärkten Verbundelementen, so ist es zum jetzigen Zeitpunkt praxisnah, dass Zulieferer einem Hersteller von faserverstärkten Verbundelementen die von den Zulieferern individuell hergestellten Grundkomponenten, aus denen dann das faserverstärkte Verbundelement hergestellt wird, zuliefern. So wird ein derartiger Hersteller häufig die zu verwendenden Fasern, bzw. die zu verwendenden Fasergewebe von einem Zulieferer beziehen, ebenso wie er beispielsweise das Harz, einem ggf. einzusetzenden Füller oder einen ggf. einzusetzenden Härter von einem Zulieferer bezieht. Ebenso ist es denkbar, dass ein derartiger Hersteller das in den Harz einzubindende Einsatzstück in Form eines speziell ausgebildeten Halbzeugs bei einem Zulieferer bezieht.

Das erfindungsgemäße Halbzeug ist für das Herstellen eines faserverstärkten, ein Befestigungsloch oder einen Befestigungsvorsprung aufweisenden Verbundelements geeignet. Hierzu weist es ein Befestigungsloch oder einen Befestigungsvorsprung auf, so dass durch das Einbringen dieses Halbzeugs während der Herstellung des Verbundelements in, bzw. an dem Verbundelement ein Befestigungsloch, bzw. ein Befestigungsvorsprung erzeugt wird.

Das erfindungsgemäße Halbzeug weist einen Kopf und eine Spitze auf. Zwischen dem Kopf und der Spitze ist ein Stift vorgesehen, der sich entlang einer Längsachse erstreckt, die vom Kopf zur Spitze weist. Diese Grundform des Halbzeugs ermöglicht ein besonders einfaches Einbringen des Halbzeugs zwischen die Fasern des Verbundelements. Insbesondere für die Ausführungsformen, bei denen für das Verbundelement ein Fasergewebe (in Abgrenzung zu losen Fasern) eingesetzt wird, erlaubt es dieser Grundaufbau besonders gut, dass Halbzeug während des Herstellungsprozesses des Verbundelements zwischen die Fasern des Fasergewebes zu schieben. Zudem kann der gewählte Grundaufbau die Gefahr des Brechens, bzw. Reißens der umliegenden Fasern während des Einschiebens verringern.

Der Kopf weist in einer bevorzugten Ausführungsform zumindest in eine Richtung, senkrecht zur Längsachse, vorzugsweise in die Mehrzahl der Richtungen senkrecht zur Längsachse und insbesondere bevorzugt in alle Richtungen senkrecht zur Längsachse eine größere Erstreckung (gemessen als der Abstand von der Längsachse in radialer Richtung) auf, als die maximale Erstreckung des Stifts und/oder als die maximale Erstreckung der Spitze in diese Richtung. Dadurch bietet sich die Möglichkeit, den Kopf als Einschubbegrenzung zu verwenden, also über die

Dimensionierung des Kopfes festzulegen, wie tief das Halbzeug beim Einbringen in die Fasern eintaucht. Ebenso bietet eine derartige Auslegung des Kopfes die Möglichkeit, den Kopf als Manipulator für das Halbzeug zu verwenden, insbesondere als Angriffsfläche für Rückhalteelemente, beispielsweise Rückhalteelemente in einer Gießform für ein faserverstärktes Verbundelement, mit denen die Lage des Halbzeugs im Raum festgelegt werden kann.

Das erfindungsgemäße Halbzeug weist ein in den Kopf eingebrachtes Befestigungsloch und/oder einen an dem Kopf vorgesehenen Befestigungsvorsprung auf.

An dem Stift des erfindungsgemäßen Halbzeugs ist ein Rücksprung vorgesehen, an dem eine im Winkel von > 0 ° und < 180 °, insbesondere bevorzugt in einem Winkel von > 10 ° und < 170 °, insbesondere bevorzugt in einem Winkel von > 20 ° und < 160 °, insbesondere bevorzugt in einem Winkel von > 30 ° und < 150 °, insbesondere bevorzugt in einem Winkel von > 40 ° und < 140 °, insbesondere bevorzugt in einem Winkel von > 50 ° und < 130 °, insbesondere bevorzugt in einem Winkel von > 60 ° und < 120 °, insbesondere bevorzugt in einem Winkel von > 70 ° und < 110 °, insbesondere bevorzugt in einem Winkel von > 80 ° und < 100 °, insbesondere bevorzugt in einem Winkel von 90° zur Längsachse stehende, dem Kopf zugewandte Haltefläche ausgebildet ist. Der erfindungsgemäß vorgesehene Rücksprung am Stift bietet die Möglichkeit, dass sich die Fasern des Verbundelements und/oder der Harz des Verbundelements und/oder der Füller (soweit vorgesehen) und/oder der Härter (soweit vorgesehen) des Verbundelements während der Herstellung des Verbundelements mit dem Stift verzahnen können. Damit ist gemeint, dass in einer Blickrichtung entlang der Längsachse, bzw. parallel zur Längsachse sich Elemente des Stifts mit Fasern, bzw. dem Harz, bzw. dem Füller, bzw. dem Härter abwechseln. Dieses Verzahnen bietet den Vorteil, dass ein Herausziehen des Halbzeugs aus dem Verbundelement erschwert wird. Dem Herausziehen des Halbzeugs werden durch die erfindungsgemäß vorgeschlagene Verzahnung (durch das Vorsehen des Rücksprungs mit seiner Halbefläche) höhere Haltekräfte entgegen gesetzt, als das bei einem Stift mit glatter Außenoberfläche der Fall wäre.

Als eine dem Kopf zugewandte Haltefläche wird eine Fläche verstanden, deren Flächennormale (soweit die Haltefläche eben ausgebildet ist) eine Komponente aufweist, die in Richtung des Kopfes weist. Bei einer nicht eben ausgebildeten Haltefläche, beispielsweise wenn die Haltefläche ballig ausgebildet ist, wird unter einer dem Kopf zugewandten Haltefläche eine solche verstanden, die zumindest eine Flächennormale aufweist, die eine Komponente aufweist, die in Richtung auf den Kopf zeigt. Ein Gegenstück zu einer dem Kopf zugewandten Haltefläche wäre eine Fläche, die der Spitze zugewandt ist.

In einer bevorzugten Ausführungsform weist ein nicht-erfindungsgemäßes Halbzeug eine Rippe auf, die sich von dem Stift in eine Richtung von > 0 ° und < 180 °, insbesondere bevorzugt in eine Richtung von > 10° und < 170 °, insbesondere bevorzugt in eine Richtung von > 20 ° und < 160 °, insbesondere bevorzugt in eine Richtung von > 30 ° und < 150 °, insbesondere bevorzugt in eine Richtung von > 40° und < 140 °, insbesondere bevorzugt in eine Richtung von > 50° und < 130 °, insbesondere bevorzugt in eine Richtung von > 60 ° und < 120 °, insbesondere bevorzugt in eine Richtung von > 70 ° und < 110 °, insbesondere bevorzugt in eine Richtung von > 80 ° und < 100 °, insbesondere bevorzugt in eine Richtung von 90° zur Längsachse erstreckt und an der die dem Kopf zugewandte Haltefläche ausgebildet ist.

Als eine Rippe wird jedes vorstehende Element des Stifts verstanden, dessen Erstreckung tangential zu einem Kreis um die Längsachse, bzw. dessen Erstreckung entlang eines Kreisbogens, bzw. eines Ellipsenbogens um die Längsachse länger ist, als seine Erstreckung in eine Richtung radial zur Längsachse und/oder länger ist als seine Erstreckung in eine Richtung parallel zur Längsachse. Es sind Ausführungsformen der Erfindung denkbar, bei denen die Haltefläche an einem widerhakenförmigen Element, beispielsweise einem widerhakenförmigen Element einer Harpune ausgebildet ist, dessen Erstreckung tangential zu einem Kreis um die Längsachse, bzw. dessen Erstreckung entlang eines Kreisbogens, bzw. eines Ellipsenbogens um die Längsachse kürzer ist, als seine Erstreckung in eine Richtung radial zur Längsachse und/oder länger ist als seine Erstreckung in eine Richtung parallel zur Längsachse. Es steht jedoch zu erwarten, dass hierdurch nur eine kleine Haltefläche erzeugt werden kann, bzw. für das Erzeugen einer guten Haltekraft eine Vielzahl derartiger widerhakenförmiger Elemente und somit eine Vielzahl von Halteflächen vorgesehen werden muss. Es kann sich herausstellen, dass das Erzeugen einer solchen Vielzahl von widerhakenförmigen Elementen bei der Herstellung des Halbzeugs aufwendig ist. Durch das Vorsehen einer Rippe kann bereits durch ein einziges geometrisches Element an dem Stift eine Haltefläche mit größerer Ausdehnung vorgesehen werden, als sie bei widerhakenförmigen Elementen gegeben ist.

Die Rippe kann in einem Querschnitt, dessen Schnittebene die Längsachse enthält, die Form eines Dreiecks aufweisen. Die Rippe hätte dann beispielsweise die Querschnittsform eines Sägezahns. In einer besonders bevorzugten Ausführungsform weist der Querschnitt der Rippe in einer Schnittebene, die die Längsachse enthält, eine polygonale Form auf, kann beispielsweise rechteckig, insbesondere bevorzugt quadratisch sein, kann aber auch trapezförmig oder die Form eines Parallelogramms oder die Form eines Vieleckes aufweisen.

Unter einem Erstrecken der Rippe in eine bestimmte Richtung wird verstanden, dass der Stift zumindest im Bereich der Rippe einen Oberflächenabschnitt aufweist, der näher zur Längsachse ausgeführt ist und von dem sich die Rippe zumindest in die genannte Richtung erhebt (in diese Richtung weiter von der Längsachse entfernt ist als der an die Rippe angrenzende Abschnitts der Oberfläche des Stifts).

Die Rippen erstrecken sich entlang eines Bogens um die Längsachse. Als Bogen um die Längsachse wird dabei jegliche Form verstanden, bei der die Rippe die Längsachse nicht umläuft. Als eine die Längsachse umlaufende Rippe wird eine Rippe verstanden, bei der in eine Blickrichtung entlang der Längsachse keine Lücke in der Rippe sichtbar ist, die Rippe also geschlossen ist (losgelöst davon, ob dies durch eine ringförmig ausgestaltete Rippe bereitgestellt wird oder durch eine Rippe, die sich helixförmig um die Längsachse windet). Die Höhe der Rippe, womit dabei die Erstreckung der Rippe in Richtung radial zur Längsachse verstanden wird, variiert über die Erstreckung der Rippe variiert. Somit weicht die Rippe von einer kreisbogenförmigen Erstreckung um die Längsachse ab.

In einer bevorzugten Ausführungsform weist die Rippe einen Absatz auf, an dem eine Abstützfläche ausgebildet ist, die eine Flächennormale aufweist, die zumindest eine Komponente aufweist, die tangential zu einem Kreis um die Längsachse verläuft. In einer bevorzugten Ausführungsform weist die Flächennormale der Abstützfläche in eine Richtung tangential zu einem Kreis um die Längsachse. Der Absatz kann inmitten der Rippe, also an irgendeinem Punkt entlang der Erstreckung der Rippe um die Längsachse vorgesehen sein, beispielsweise kann die Rippe beginnend von einem ersten Ende mit einer ersten Höhe ausgebildet sein, wobei die Rippe dann über den Absatz in einen Bereich übergeht, in dem die Höhe der Rippe größer ist, als in dem ersten Abschnitt. Hinsichtlich der Gestaltung ihres äußeren Umfangs kann die Rippe also beispielsweise stufenförmig ausgebildet sein, wobei eine oder sogar mehrere Stufen entlang der Erstreckung der Rippe vorgesehen sein können. In einer bevorzugten Ausführungsform weist die Rippe eine Abfolge von Absätzen auf. Die Umfangsfläche der Rippe kann beispielsweise ein Zahnprofil aufweisen. Als Teil der Umfangsfläche der Rippe können auch von dem übrigen Teil der Rippe vorstehende Haltezähne vorgesehen sein.

In einer bevorzugten Ausführungsform wird der Absatz, bzw. bei mehreren Absätzen pro Rippe zumindest ein Absatz der Rippe durch das Ende der Rippe bereitgestellt. Insbesondere bevorzugt ist die Abstützfläche die Fläche, die eine radial nach außen weisend Umfangsfläche der Rippe mit dem Oberflächenabschnitt des Stifts verbindet, von dem sich die Rippe in einem Winkel von > 0° und > 180° erhebt. Die Abstützfläche kann mithin die Endfläche einer sich entlang eines Bogens um die Längsachse erstreckenden Rippe sein. Das Vorsehen einer Abstützfläche an der Rippe bietet den Vorteil, dass die Rippe damit einer Rotation des in den Harz des Verbundelements eingebundenen Einsatzstücks um die Längsachse herum entgegenwirken kann. Damit wird nicht nur durch die dem Kopf zugewandte Haltefläche ein besonders gutes Halten des Einsatzstückes gegen ein Herausziehen entlang der Längsachse bereitgestellt, sondern durch die Abstützfläche auch eine besonders gute Aufnahme von Rotationskräften, beispielsweise für das Einschrauben einer Schraube in einer bevorzugten Ausführungsform mit in dem Befestigungsloch vorgesehenem Innengewinde.

In einer bevorzugten Ausführungsform ist die Abstützfläche eben ausgeführt. Sie kann sich dabei in einer Ebene befinden, die die Längsachse einschließt. Dadurch kann eine maximale Aufnahme von Rotationskräften bereitgestellt werden. Es ist jedoch auch denkbar, dass Vorteile erreicht werden, wenn die Abstützfläche zwar eben ausgebildet ist, jedoch in einer Ebene ausgeführt ist, die die Längsachse nicht einschließt, die Abstützfläche quasi als Rampe an der Rippe ausgebildet ist. Eine derart winkelige Ausführung der Abstützfläche kann beispielsweise das Einbringen des Halbzeugs in ein Fasergewebe erleichtern, wenn ein solches zur Herstellung eines erfindungsgemäßen Verbundelements verwendet wird. Ebenso ist es denkbar, dass Vorteile erreicht werden können, wenn die Abstützfläche in einer Ebene verläuft, die die Längsachse nicht enthält und auch nicht parallel zur Längsachse verläuft. Die Abstützfläche kann mithin entweder der Spitze etwas zugewandt sein oder dem Kopf etwas zugewandt sein. Auch hieraus mögen sich Vorteile während des Herstellungsprozesses des erfindungsgemäßen Verbundelements ergeben. In einer bevorzugten Ausführungsform steht die Flächennormale der Abstützfläche in einem Winkel von <60°, insbesondere bevorzugt von <45° und insbesondere bevorzugt von <30° zu der in dem Schnittpunkt der Abstützfläche mit einem Kreis um die Längsachse an den Kreis angelegten Tangente.

Die Höhe der Rippe variiert entlang ihrer Erstreckung um die Längsachse. In einer bevorzugten Ausführungsform variiert die Höhe zumindest über einen Abschnitt entlang der Erstreckung der Rippe um die Längsachse stetig. Es sind aber auch Ausführungsformen denkbar, bei denen die Höhe nicht stetig variiert, beispielsweise bei der vorstehend beschriebenen Ausführungsform mit einem an der Rippe ausgebildeten Absatz oder bei einer Ausführungsform, bei der der äußere Rand der Rippe einen Knick aufweist. Ein solcher Knick kann beispielsweise am Fuß eines als Teil der Umfangsfläche vorgesehenen, von dem übrigen Teil der Rippe vorstehenden Haltezahns ausgeführt sein.

In einer bevorzugten Ausführungsform ist die Haltefläche eben ausgeführt und befindet sich in einer Ebene, die senkrecht zur Längsachse steht. Es sind jedoch auch Ausführungsformen denkbar, bei denen die Haltefläche nicht eben ausgeführt ist, beispielsweise wenn die Haltefläche an einer Rippe gebildet wird, die sich helixförmig um die Längsachse windet. Ebenso ist es denkbar, dass die Haltefläche durch einen Oberflächenabschnitt eines Kegels gebildet wird, beispielsweise, wenn die Rippe in Richtung auf den Kopf angeschrägt ist.

In einer bevorzugten Ausführungsform weist die Rippe eine der Spitze zugewandte Gegenfläche auf, die vergleichbar der Haltefläche eine Haltefunktion ausüben kann, beispielsweise Gegenkräften entgegenwirkt, die das Einsatzstück tiefer in das Verbundelement drücken möchten, und die allein zur sprachlichen Unterscheidung von der dem Kopf zugewandten Haltefläche als Gegenfläche bezeichnet wird. Die Gegenfläche kann als eine im Winkel von > 0 ° und < 180 °, insbesondere bevorzugt in einem Winkel von > 10 ° und < 170 °, insbesondere bevorzugt in einem Winkel von > 20 ° und < 160 °, insbesondere bevorzugt in einem Winkel von > 30 ° und < 150 °, insbesondere bevorzugt in einem Winkel von > 40 ° und < 140 °, insbesondere bevorzugt in einem Winkel von > 50 ° und < 130 °, insbesondere bevorzugt in einem Winkel von > 60 ° und < 120 °, insbesondere bevorzugt in einem Winkel von > 70 ° und < 110 °, insbesondere bevorzugt in einem Winkel von > 80 ° und < 100 °, insbesondere bevorzugt in einem Winkel von 90° zur Längsachse stehend ausgeführt Fläche ausgebildet sein. Es sind Ausführungsformen denkbar, bei denen die Haltefläche und die Gegenfläche bzgl. einer Ebene, die senkrecht zur Längsachse steht, spiegelsymmetrisch ausgeführt sind. Ebenso sind Ausführungsformen denkbar, bei denen die Haltefläche und die Gegenfläche parallel zu einander verlaufen.

In einer bevorzugten Ausführungsform weist die Rippe eine Umfangsfläche auf. In einer bevorzugten Ausführungsform stehen alle Flächennormalen der Umfangsfläche senkrecht zur Längsachse und bilden mithin einen Oberflächenabschnitt eines Zylinders um die Längsachse. In einer alternativen Ausführungsform liegen alle Flächennormalen zu der Umfangsfläche der Rippe in einer Ebene senkrecht zur Längsachse, wobei einige Flächennormalen die Längsachse nicht schneiden. In einer alternativen Ausführungsform ist die Umfangsfläche ein Abschnitt der Oberfläche eines Kegels.

In einer bevorzugten Ausführungsform weist die Rippe die Haltefläche und die vorstehend beschriebene Gegenfläche auf und zudem eine Umfangsfläche, wobei die Gegenfläche über eine Kante in die Umfangsfläche übergeht und die Umfangsfläche über eine Kante in die Haltefläche übergeht.

Der Stift des erfindungsgemäßen Halbzeugs weist mehrere Rippen auf. Es sind Ausführungsformen denkbar, bei denen mehrere Rippen auf gleicher Höhe vorgesehen sind, wobei die jeweilige Rippe sich entlang eines Bogens um die Längsachse erstreckt und nicht umlaufend um die Längsachse ausgebildet ist. Zwischen den auf gleicher Höhe vorgesehenen Rippen können Nuten vorgesehen sein, beispielsweise indem die Endflächen der Rippen als Abstützflächen ausgeführt sind.

Ergänzend oder alternativ sind Ausführungsformen denkbar, bei denen mehrere Rippen versetzt zueinander entlang der Erstreckung des Stifts an dem Stift vorgesehen sind.

In einer bevorzugten Ausführungsform sind die Rippen gleichartig zueinander ausgeführt. Damit ist gemeint, dass eine in einem ersten Bereich des Stifts entlang seiner Erstreckung in Längsrichtung vorgesehene Rippe in einer anderen Rippe, die in einem Bereich des Stifts weiter entlang seiner Erstreckung in Längsrichtung angeordnet ist, eine Entsprechung findet, nämlich zumindest hinsichtlich ihrer geometrischen Form gleich ausgeführt ist, auch wenn sich die absolute Größe der jeweiligen Rippe unterscheiden mag, insbesondere bevorzugt aber ebenfalls gleich ausgeführt ist. Sind mehrere Rippen in einem Bereich des Stifts entlang seiner Erstreckung in Längsrichtung vorgesehen, so findet in einer bevorzugten Ausführungsform jede dieser in diesem Bereich vorgesehene Rippe zumindest hinsichtlich ihrer Formgebung, vorzugweise auch hinsichtlich ihrer Größe eine Entsprechung in einer Rippe, die in einem anderen Bereich des Stifts entlang seiner Erstreckung in Längsrichtung vorgesehen ist. In einer bevorzugten Ausführungsform sind die sich entsprechenden Rippen fluchtend ausgeführt, also entlang einer Linie, die parallel zur Längsachse verläuft. Es sind aber auch Ausführungsformen denkbar, bei denen die sich entsprechenden Rippen in Blickrichtung der Längsachse versetzt zueinander (nicht fluchtend) angeordnet sind.

In einer bevorzugten Ausführungsform sind mehrere Rippen, die sich jeweils entlang eines Bogens um die Längsachse erstrecken, in einem ersten Bereich des Stifts entlang seiner Erstreckung in Längsrichtung vorgesehen und mehrere Rippen, die sich jeweils entlang eines Bogens um die Längsachse erstrecken, in einem zweiten Bereich des Stifts entlang seiner Erstreckung in Längsrichtung vorgesehen, wobei zwischen den jeweils in einem Bereich vorgesehenen Rippen eine Ausnehmung vorgesehen ist und die Ausnehmung zwischen zwei Rippen in dem ersten Bereich fluchtend mit der Ausnehmung zwischen zwei Rippen des zweiten Bereichs ausgeführt ist. Dadurch wird eine Art "Kanal" gebildet, der sich in Richtung parallel zur Längsachse des Halbzeugs erstreckt. Erstarrt in diesem Kanal das Harz, in den das Halbzeug eingebunden wird, so entsteht ein sich entlang der Längsachse erstreckender starrer Steg in dem Harz, der eine besonders gute Stabilität bereitstellen kann. In einer bevorzugten Ausführungsform wird die Ausnehmung durch einander gegenüberliegend ausgeführte, endseits ausgeführte Abstützflächen zweier benachbarter Rippen begrenzt.

In einer bevorzugten Ausführungsform sind mehrere Rippen, die sich jeweils entlang eines Bogens um die Längsachse erstrecken, in einem ersten Bereich des Stifts entlang seiner Erstreckung in Längsrichtung vorgesehen und mehrere Rippen, die sich jeweils entlang eines Bogens um die Längsachse erstrecken, in einem zweiten Bereich des Stifts entlang seiner Erstreckung in Längsrichtung vorgesehen, wobei zwischen den jeweils in einem Bereich vorgesehenen Rippen eine Ausnehmung vorgesehen ist und die Ausnehmung zwischen zwei Rippen in dem ersten Bereich nicht fluchtend mit der Ausnehmung zwischen zwei Rippen des zweiten Bereichs ausgeführt ist.

In einer bevorzugten Ausführungsform sind mehrere, entlang der Längserstreckung des Stifts versetzt zueinander angeordnete Rippen vorgesehen, insbesondere bevorzugt mindestens drei, wobei bei dieser Ausführungsform der Abstand vom Kopf zur dem Kopf am nächsten liegenden Rippe gleich dem Abstand zwischen den Rippen in Richtung der Längsachse gesehen ist. In einer alternativen Ausführungsform sind mehrere, entlang der Längserstreckung des Stifts versetzt zueinander angeordnete Rippen vorgesehen, insbesondere bevorzugt mindestens drei, wobei bei dieser Ausführungsform der Abstand vom Kopf zur dem Kopf am nächsten liegenden Rippe anders, insbesondere bevorzugt größer ist, als der Abstand zwischen den danach folgenden Rippen in Richtung der Längsachse gesehen ist. Insbesondere bevorzugt ist der Abstand der übrigen Rippen zueinander gleich.

In einer bevorzugten Ausführungsform weist der Stift in mehrere, in Längsrichtung des Stifts versetzt zueinander angeordnete Rippen auf, wobei zumindest in einem Querschnitt, der die Längsachse enthält, die jeweilige auf einer Seite der Längsachse liegenden Punkte der maximalen Erstreckung der jeweiligen Rippe von der Längsachse auf einer Geraden liegen. In einer bevorzugten Ausführungsform verläuft diese Gerade nicht parallel zur Längsachse. Vorzugsweise ist dies bei der Mehrzahl, vorzugsweise bei allen Querschnitten, die die Längsachse enthalten, der Fall. In einer besonders bevorzugten Ausführungsform schließt die Gerade, die die jeweiligen auf einer Seite der Längsachse liegenden Punkte der maximalen Erstreckung der jeweiligen Rippe von der Längsachse in einem solchen Querschnitt verbindet, mit einer Geraden, die die jeweiligen auf der anderen Seite der Längsachse liegenden Punkte der maximalen Erstreckung der jeweiligen Rippe von der Längsachse in diesem Querschnitt verbindet, eine Winkel von < 60°, vorzugsweise < 45°, vorzugsweise < 30°, vorzugsweise < 20°, vorzugsweise < 15°ein.

In einer bevorzugten Ausführungsform sind zwei oder mehr Rippen vorgesehen, die sich von dem Stift in eine Richtung von >0° und <180°, insbesondere in einem Winkel von >10° und <170° zur Längsachse erstrecken und an denen jeweils eine der dem Kopf zugewandten Halteflächen ausgebildet ist, wobei die Rippen in Richtung der Längsachse beabstandet voneinander angeordnet sind.

In einer bevorzugten Ausführungsform ist die Spitze und/oder die Umfangsfläche des Kernquerschnittes des Halbzeuges und/oder die umhüllende Mantelfläche, die die Rippen umspannt, sich in Richtung der Längsachse verjüngend ausgeführt.

In einer bevorzugten Ausführungsform ist die Spitze des Halbzeugs kegelförmig oder kegelstumpfförmig ausgebildet. Es sind auch Ausführungsformen denkbar, bei denen die Spitze kegelförmig oder kegelstumpfförmig ist, jedoch in diese kegelförmige, bzw. kegelstumpfförmige Grundform eingebrachte Eindellungen aufweist. In einer bevorzugten Ausführungsform beträgt der Öffnungswinkel des Kegels, bzw. des Kegelstumpfs weniger als 80 °, insbesondere bevorzugt weniger als 75 °, insbesondere bevorzugt weniger als 72 ° und insbesondere bevorzugt mehr als 50 °, insbesondere bevorzugt mehr als 60 °, insbesondere bevorzugt mehr als 70 ° und beträgt in einer besonders bevorzugten Ausführungsform 71 °.

In einer bevorzugten Ausführungsform schließt sich ein Rücksprung an die Spitze an, so dass die Haltefläche an einem sich an die Spitze anschließenden Rücksprung ausgebildet ist. Ferner sind Ausführungsformen denkbar, bei denen die Haltefläche an einem sich an die Spitze anschließenden Rücksprung ausgebildet ist und zudem Rippen vorgesehen sind, an denen weitere Halteflächen ausgebildet sind.

In einer bevorzugten Ausführungsform ist der Kopf tellerförmig oder schirmförmig ausgebildet. Der Kopf kann zylinderförmig oder kegelstumpfförmig oder würfelförmig ausgeführt sein oder die Form eines Prismatoids aufweisen.

In einer bevorzugten Ausführungsform weist der Kopf ein Befestigungselement auf, das sich von dem Kopf in eine Richtung entgegengesetzt zur Spitze erstreckt und einen Befestigungsvorsprung ausbildet. Dieses Verbindungsstück kann beispielsweise ein Gewindestift oder ein T-Stück oder eine Kugel oder eine Abfolge von mindestens 2 aufeinander gesetzten Kugeln oder ein Stift mit einem in den Stift eingebrachtes Innengewinde oder ein T-Bolzen oder ein pilzförmiges Element sein.

In einer bevorzugten Ausführungsform ist ein Befestigungsloch in den Kopf eingebracht. In einer denkbaren Ausführungsform erstreckt sich das Befestigungsloch nur entlang der Gesamterstreckung des Kopfes und erstreckt sich nicht in den Stift hinein. Dadurch wird die Stabilität des Stifts erhöht. In einer bevorzugten Ausführungsform erstreckt sich das Befestigungsloch in den Kopf hinein und auch zumindest in einen Teil des Stifts hinein. Dadurch kann die Länge des Befestigungslochs vergrößert werden und damit die Länge der Befestigungsmöglichkeit für ein in das Befestigungselement einzubringendes Befestigungselement. In einer bevorzugten Ausführungsform erstreckt sich das Befestigungsloch durch den Kopf, durch den Stift und bis zur Spitze.

In einer bevorzugten Ausführungsform ist in das Befestigungsloch ein Gewinde eingebracht.

In einer bevorzugten Ausführungsform verjüngt sich das Befestigungsloch in Richtung auf die Spitze.

In einer bevorzugten Ausführungsform weist das Befestigungsloch in Blickrichtung vom Kopf zur Spitze entlang der Längsachse einen Rücksprung, bzw. eine Hinterschneidung auf.

In einer bevorzugten Ausführungsform erstreckt sich das Befestigungsloch bis in den Stift hinein, wobei der Stift in dem Bereich, in dem sich das Befestigungsloch in den Stift hinein erstreckt, eine konstante Wandstärke entlang der Erstreckung des Stifts in Längsrichtung über diesen Bereich aufweist.

In einer bevorzugten Ausführungsform hat der Stift eine Grundform, deren Oberfläche der Oberfläche eines Zylinders entspricht oder der Oberfläche eines Kegelstumpfs entspricht, wobei sich die Rippe, bzw. die Rippen von diesem Grundkörper fort in eine Richtung in einem Winkel von > 0 ° und < 180 ° zur Längsachse erstrecken.

In einer bevorzugten Ausführungsform weist das Halbzeug einen sich in den Bereich des Stifts erstreckenden Einsatz auf. Der Einsatz kann beispielsweise ein Hohlzylinder mit Innengewinde sein, der aus einem anderen Material hergestellt sein kann, als das übrige Material des Stifts. Wird das Halbzeug beispielsweise im Wege des Spritzgusses hergestellt, so kann das Halbzeug durch Überspritzen über diesen Einsatz erzeugt werden. Durch die Verwendung des Einsatzes kann das Zusammenwirken zwischen dem Befestigungsloch und einem Befestigungselement, dass in das Befestigungsloch eingesetzt wird, verbessert werden, beispielsweise ein tragfähigeres Gewinde bereitgestellt werden.

In einer bevorzugten Ausführungsform ist das Halbzeug zumindest teilweise, insbesondere bevorzugt gänzlich aus einem Kunststoff hergestellt. Insbesondere bevorzugt werden nicht leitende technische Kunststoffe wie beispielsweise PA (Polyamide) oder POM (Polyoxymethylen). Bevorzugt werden dabei auch für das Halbzeug insbesondere Faserverstärkte Sorten. Das Halbzeug kann aber auch aus allen anderen Kunststoffen, aus metallischen oder nichtmetallischen Werkstoffen bestehen.

In einer bevorzugten Ausführungsform verjüngt sich eine den Grundkörper des Stifts Umhüllende in Richtung auf die Spitze.

In einer bevorzugten Ausführungsform ist die Spitze kegelförmig ausgeführt wobei die Längsachse durch die Spitze des Kegels verläuft. In einer alternativen Ausführungsform ist die Spitze kegelstumpfförmig ausgeführt, wobei die Längsachse die Symmetrieachse des Kegels bildet. In einer bevorzugten Ausführungsform bildet die Längsachse die Symmetrieachse eines in den Kopf eingebrachten Befestigungslochs.

Ferner schlägt die Erfindung gemäß Anspruch 8 die Verwendung eines erfindungsgemäßen Halbzeugs zum Herstellen eines faserverstärkten, ein Befestigungsloch oder einen Befestigungsvorsprung aufweisenden Verbundelements vor.

Erfindungsgemäß wird ferner ein Verbundelement gemäß Anspruch 9 mit in einem ausgehärteten Harz eingebundenen Fasern und einem ebenfalls in dem Harz eingebundenen Einsatzstück vorgeschlagen. Das Einsatzstück weist einen Kopf und eine Spitze auf. Zwischen dem Kopf und der Spitze ist ein Stift vorgesehen, der sich entlang einer Längsachse erstreckt, die vom Kopf zur Spitze weist. Ein Befestigungsloch ist in dem Kopf eingebracht und/oder an dem Kopf ist ein Befestigungsvorsprung vorgesehen. Erfindungsgemäß wird vorgeschlagen, dass an dem Stift ein Rücksprung vorgesehen ist, an dem eine im Winkel von > 0 ° und < 180 °, insbesondere bevorzugt in einem Winkel von > 10 ° und < 170 °, insbesondere bevorzugt in einem Winkel von > 20 ° und < 160 °, insbesondere bevorzugt in einem Winkel von > 30 ° und < 150 °, insbesondere bevorzugt in einem Winkel von > 40 ° und < 140 °, insbesondere bevorzugt in einem Winkel von > 50 ° und < 130 °, insbesondere bevorzugt in einem Winkel von > 60 ° und < 120 °, insbesondere bevorzugt in einem Winkel von > 70 ° und < 110 °, insbesondere bevorzugt in einem Winkel von > 80 ° und < 100 °, insbesondere bevorzugt in einem Winkel von 90° zur Längsachse stehende, dem Kopf zugewandte Haltefläche ausgebildet ist.

Ein Verbundelement ist ein Element aus einem Verbundwerkstoff, auch Kompositwerkstoff genannt. Darunter wird ein Werkstoff aus zwei oder mehr verbundenen Materialien verstanden, der andere Werkstoffeigenschaften besitzt als seine einzelnen Komponenten. Das erfindungsgemäß vorgeschlagene Verbundelement ist dabei insbesondere bevorzugt aus einem Faserverbundwerkstoff hergestellt. Der Faserverbundwerkstoff weist insbesondere bevorzugt Fasern und ein Harz auf, wobei im Endzustand des Verbundelements (also nach der Herstellung des Verbundelements) die Fasern in dem ausgehärteten Harz eingebunden sind. Ferner kann der Faserverbundwerkstoff einen Füller und/oder einen Härter aufweisen bzw. bei der Herstellung des Faserverbund-werkstoffs können ein Füller und/oder ein Härter eingesetzt werden. Der Faserverbund kann schichtartig, mit unterschiedlichen Schichten ausgebildet sein, wobei sich die Schichten dadurch voneinander unterscheiden, dass entweder in den jeweiligen Schichten verschiedene Fasern und/oder verschiedene Harze eingesetzt werden. In einer besonders bevorzugten Ausführungsform ist der Faserverbundwerkstoff ein einschichtiger Verbundwerkstoff, bei dem die Fasern zwar in mehreren Lagen vorgesehen sein können, aber durchgängig Fasern der gleichen Art sind und durchgängig das gleiche Harz verwendet wird. Der Faserverbundwerkstoff kann Kurzfasern, Langfasern und/oder Endlosfasern aufweisen. Insbesondere bevorzugt weist der Faserverbundwerkstoff Fasergewebe auf. Der Faserverbundwerkstoff kann auch gerissene Fasern aufweisen. Bei dem erfindungsgemäßen Verfahren zum Herstellen eines Verbundelements kann es in einer bevorzugten Ausführungsform vorgesehen sein, das erfindungsgemäße Halbzeug in ein Fasergewebe einzubringen. Bei diesem Einbringen des Halbzeugs, das vorzugsweise durch Einschieben mit der Spitze voraus erfolgt, kann es passieren, dass einzelne Fasern eines Fasergewebes reißen. Somit kann das aus dem Faserverbundwerkstoff hergestellte Verbundelement auch gerissene Fasern aufweisen.

Insbesondere bevorzugt ist das Verbundmaterial ein Epoxidharz mit darin eingebetteten Kohlefasern.

Das in dem Harz eingebundene Einsatzstück ist aus einem erfindungsgemäßen Halbzeug hergestellt worden. Alle Beschreibungen von Beschaffenheitsangaben des Halbzeugs, insbesondere Geometrieangaben oder Materialangaben, die in dieser Beschreibung sind auch als Beschreibungen von Beschaffenheitsangaben des Einsatzstücks zu verstehen.

In einer bevorzugten Ausführungsform befindet sich zumindest eine Faser, vorzugsweise befinden sich mehrere Fasern oberhalb der Haltefläche bzw. in dem Raum, der sich oberhalb des Rücksprungs befindet. Dadurch kann der Herausziehwiderstand gegen das Herausziehen des Einsatzstückes erhöht werden.

In einer bevorzugten Ausführungsform weist das Einsatzstück zwei in Richtung der Längsachse voneinander beabstandete Rippen auf, wobei zumindest eine Faser, insbesondere bevorzugt eine Mehrzahl von Fasern zwischen den beiden Rippen liegt.

In einer bevorzugten Ausführungsform befindet sich ein Teil des ausgehärteten Harzes oberhalb der Haltefläche bzw. in dem Raum, der sich oberhalb des Rücksprungs befindet. Dadurch kann der Herausziehwiderstand gegen das Herausziehen des Einsatzstückes erhöht werden.

In einer bevorzugten Ausführungsform weist das Einsatzstück zwei in Richtung der Längsachse voneinander beabstandete Rippen auf, wobei sich ein Teil des Harzes zwischen den beiden Rippen befindet.

Das erfindungsgemäße Verfahren zum Herstellen eines erfindungsgemäßen Verbundelements sieht vor, dass ein erfindungsgemäßes Halbzeug mit Fasern und einem flüssigen Harz umgeben wird und das Harz ausgehärtet wird und weist die Merkmale des Anspruchs 1 auf.

Das erfindungsgemäße Verbundelement wird vorzugsweise als konstruktives Element eines Wasserfahrzeugs, eines Luftfahrzeugs oder eines Landfahrzeugs, insbesondere bevorzugt eines Kraftfahrzeugs oder eines Fahrrads verwendet. Insbesondere bevorzugt bildet das Verbundelement Teil einer Rahmenkonstruktion des Kraftfahrzeugs oder des Fahrrads. Ebenso sind Ausführungsformen denkbar, bei denen das Verbundelement Teil eines Anbauteils bildet, das mit dem Rahmen eines Kraftfahrzeugs oder eines Fahrrads verbunden wird.

Nachfolgend wir die Erfindung anhand lediglich Ausführungsbeispiele der Erfindung darstellenden Zeichnungen näher erläutert. Darin zeigen:
- Fig. 1: eine perspektivische Ansicht einer ersten Ausführungsform eines erfindungsgemäßen Halbzeugs;
- Fig. 2: eine Seitenansicht auf das erfindungsgemäße Halbzeug gemäß Fig. 1;
- Fig. 3: eine geschnittene Ansicht entlang der in Fig. 2 gezeigten Linie A-A des erfindungsgemäßen Halbzeugs gemäß Fig. 1 und 2;
- Fig. 4: eine Ansicht von unten auf das erfindungsgemäße Halbzeug gemäß Fig. 1 bis 3;
- Fig. 5: eine Vergrößerung eines Teilbereichs der Ansicht gemäß Fig. 4;
- Fig. 6: eine geschnittene Ansicht des Halbzeug entlang der Linie F-F in Fig. 2;
- Fig. 7: eine geschnittene Ansicht einer zweiten Ausführungsform eines erfindungsgemäßen Halbzeugs;
- Fig. 8: eine geschnittene Ansicht einer dritten Ausführungsform eines erfindungsgemäßen Halbzeugs;
- Fig. 9: eine geschnittene Ansicht einer vierten Ausführungsform eines erfindungsgemäßen Halbzeugs;
- Fig. 10: eine schematische Darstellung einer Abfolge von Verfahrensschritten zur Herstellung eines erfindungsgemäßen Verbundelements;

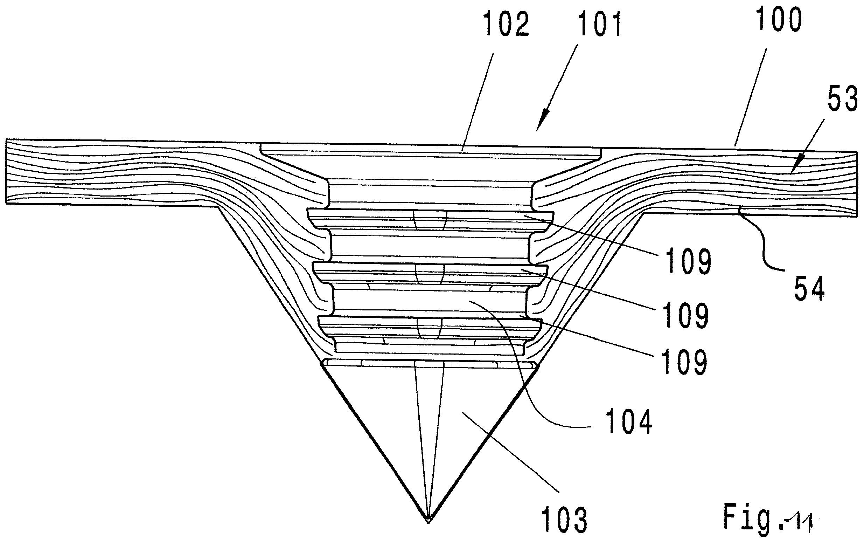

- Fig. 11: eine geschnittene Ansicht eines erfindungsgemäßen Verbundelements;
- Fig. 12: eine geschnittene Ansicht einer weiteren Ausführungsform eines erfindungsgemäßen Halbzeugs und
- Fig. 13: eine zu Fig. 6 vergleichbare Ansicht einer weiteren Ausführungsform des erfindungsgemäßen Halbzeugs.

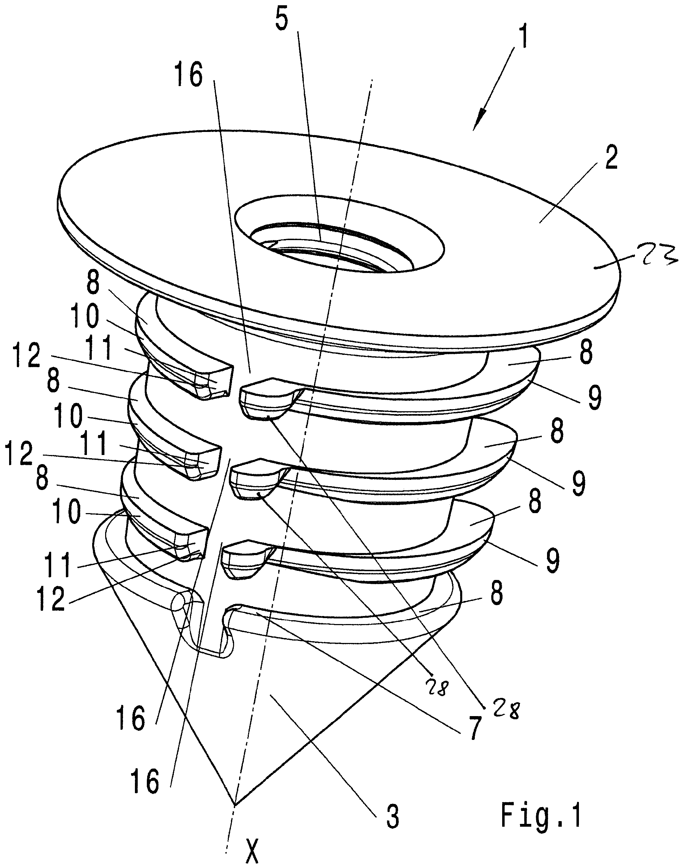

Das in den Fig. 1 bis 6 dargestellte Halbzeug 1 für das Herstellen eines faserverstärkten, ein Befestigungsloch oder einen Befestigungsvorsprung aufweisenden Verbundelements 100 weist einen Kopf 2 und eine Spitze 3 auf. Zwischen dem Kopf 2 und der Spitze 3 ist ein Stift 4 vorgesehen, der sich entlang einer Längsachse X erstreckt, die vom Kopf 2 zur Spitze 3 weist.

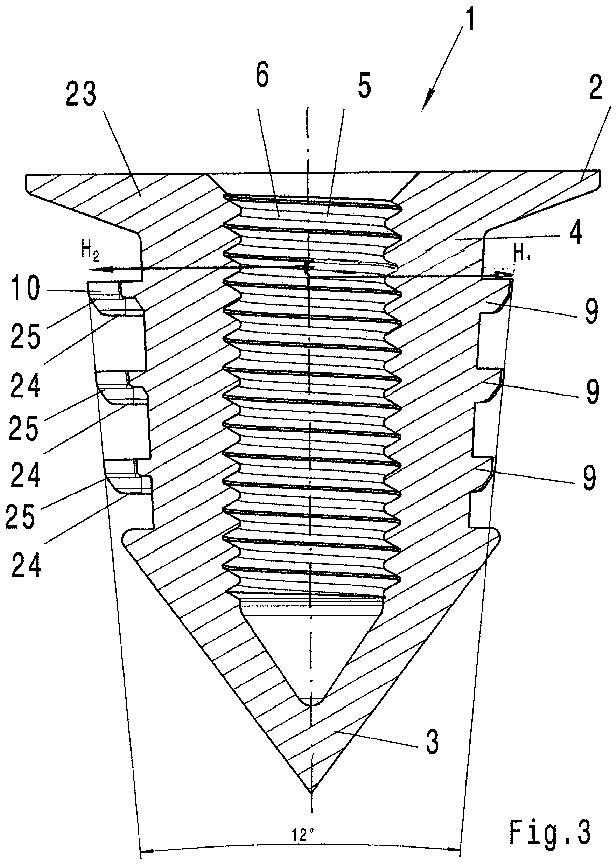

In der in den Fig. 1 bis 5 gezeigten Ausführungsform eines Halbzeugs 1 ist ein Befestigungsloch 5 vorgesehen, das in den Kopf 2 eingebracht ist. Wie insbesondere der Fig. 3 besonders gut zu entnehmen ist, erstreckt sich das Befestigungsloch 5 von dem Kopf 2 durch den Stift 4 bis in die Spitze 3. Ferner ist der Fig. 3 besonders gut zu entnehmen, dass das Befestigungsloch 5 mit einem Innengewinde 6 versehen ist.

An dem Stift 4 ist an dem Übergang von der Spitze 3 zu dem durch den Stift 4 gebildeten Abschnitt des Halbzeugs 1 ein erster Rücksprung 7 vorgesehen, an dem eine im Winkel von 90° zur Längsachse X stehende, dem Kopf 2 zugewandte Haltefläche 8 ausgeführt ist.

Ferner sind an dem Stift 4 drei in Richtung der Längsachse X zueinander versetzt angeordnete Gruppen von jeweils zwei auf gleicher Höhe angeordneten Rippen 9, 10 vorgesehen. Die Rippen 9,10 erstrecken sich von dem Stift 4 in Richtung von 90° zur Längsachse X. An jeder Rippe 9, 10 ist eine dem Kopf 2 zugewandte Haltefläche 8 ausgebildet. Bezogen auf ihre maximale Erstreckung in radialer Richtung zur Längsachse X wird durch die jeweilige Haltefläche 8 an der jeweiligen Rippe 9, 10 ein Rücksprung des Stifts 4 ausgebildet.

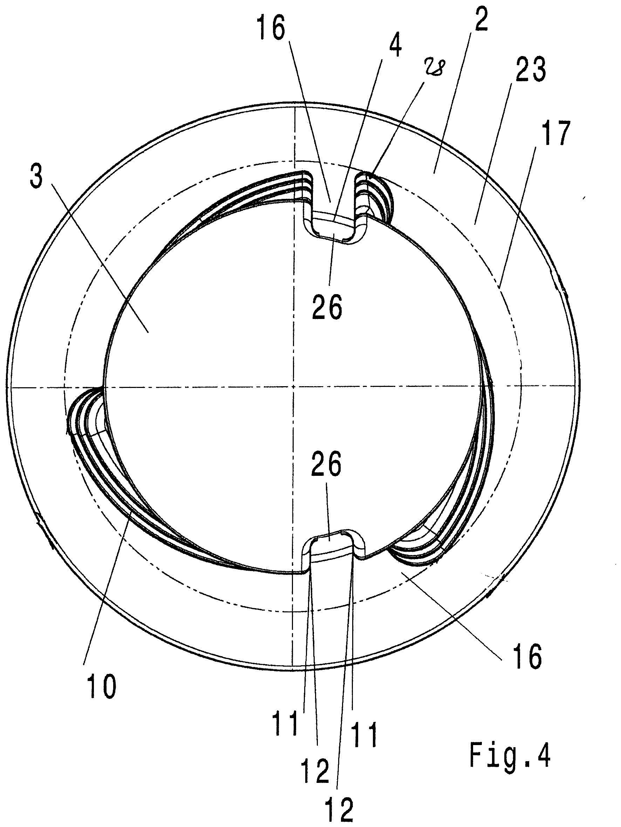

Wie insbesondere der Fig. 4 besonders gut zu entnehmen ist, ist an jeder Rippe 9, 10 an ihrem Ende ein Absatz 11 ausgebildet, an dem jeweils eine Abstützfläche 12 ausgebildet ist. Die jeweilige Abstützfläche 12 des einen Absatzes 11 der Rippe 9 ist einer Abstützfläche 12 des gegenüberliegenden Absatzes 11 der Rippe 10 zugewandt. Bei der Rippe 9 ist der Absatz 11 Teil eines Haltezahns 28, der vom übrigen Teil der Rippe radial vorsteht.

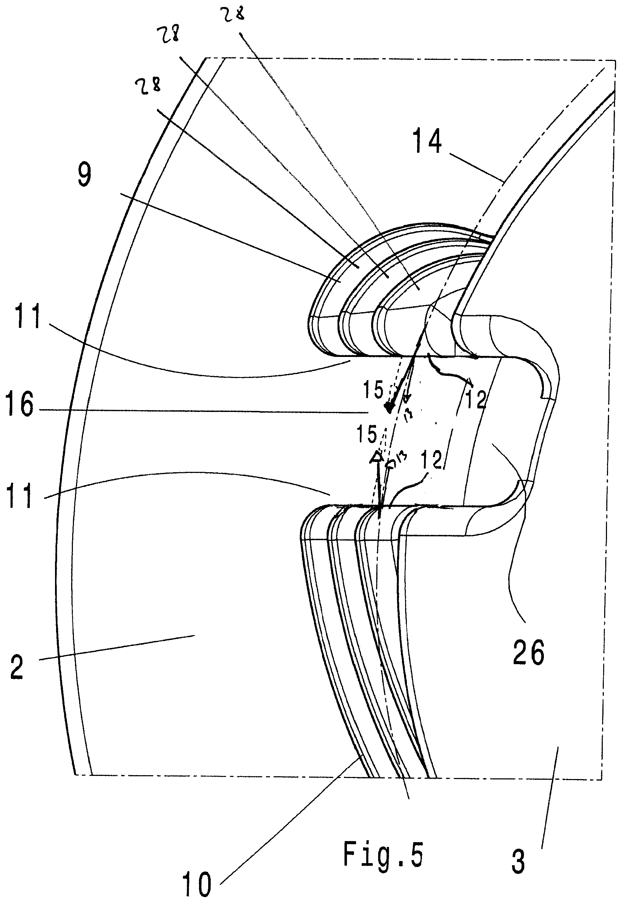

Wie die Fig. 5 besonders deutlich zeigt, weist die jeweilige Abstützfläche 12 eine Flächennormale 13 auf. In der Fig. 5 ist ein Abschnitt eines Kreises 14 um die Längsachse X dargestellt. Ferner ist mit den Pfeilen 15 die tangentiale Richtung an diesen Kreis 14 im Schnittpunkt zur jeweiligen Abstützfläche 12 dargestellt. Wie man an der Darstellung der Fig. 5 besonders gut erkennen kann, hat die jeweilige Flächennormale 13 eine Komponente, die tangential zu einem Kreis 14 um die Längsachse X verläuft.

Durch das Ausbilden der Absätze 11 an den Enden der Rippen 9, 10 wird zwischen zwei Rippen 9, 10, die auf gleicher Höhe entlang der Längserstreckung der Längsachse X angeordnet sind, eine Lücke 16 gebildet (vgl. Fig. 1, 4, 5). Wie den Fig. 1, 4 und 5 besonders gut zu entnehmen ist, sind die Lücken 16 zwischen den jeweils auf einer Höhe entlang der Längserstreckung der Längsachse X angeordneten Rippen 9,10 über die Längserstreckung bei allen vorhandenen Rippen 9, 10 übereinander (fluchtend) angeordnet, sodass sich eine Art Kanal bildet, der sich entlang der Längserstreckung des Stifts 4 ausbildet und die Rippen 9, 10 teilt. Es sind natürlich auch Ausführungsformen denkbar, bei denen die jeweiligen Lücken 16 der auf einer Höhe angeordneten Rippen 9, 10 zu der jeweiligen Lücke 16 von zwei Rippen 9, 10, die auf einer anderen Höhe angeordnet sind, nicht fluchtend zueinander ausgeführt sind, sondern versetzt.

Der Fig. 1, 4 und 5 ist zu entnehmen, dass die jeweilige Rippe 9, 10 als Bogen ausgeführt ist, der sich um die Längsachse X erstreckt. Die Rippen sind mithin nicht umlaufend ausgebildet. Die Rippen sind auch nicht - wie es bei anderen Ausführungsformen der Erfindung möglich wäre - helixförmig um die Längsachse ausgeführt, wie man es bei einem Außengewinde einer Schraube kennt.

In der Fig. 3 ist durch die Pfeile H₁ und H₂ hervorgehoben, dass der Abstand des jeweils äußeren Punktes einer Rippe zur Längsachse X unterschiedlich ist. Der Abstand des jeweils äußersten Punktes der Rippe in Radialrichtung zur Längsachse X an einem Punkt der Erstreckung der Rippe um die Längsachse X wird als deren Höhe verstanden. Wie insbesondere die Fig. 4 besonders deutlich hervorhebt, ändert sich die Höhe einer Rippe 9, 10 über deren Erstreckung entlang des Bogens um die Längsachse X entlang dessen sich die jeweilige Rippe 9, 10 erstreckt. Die äußersten Punkte der Rippe liegen somit nicht alle auf einem Kreis. Dies wird durch Einzeichnen des Kreises 17 in der Fig. 4 verdeutlicht. Der Kreis 17 um die Längsachse X verbindet die radial äußersten Punkte der Rippe 9 und der Rippe 10.

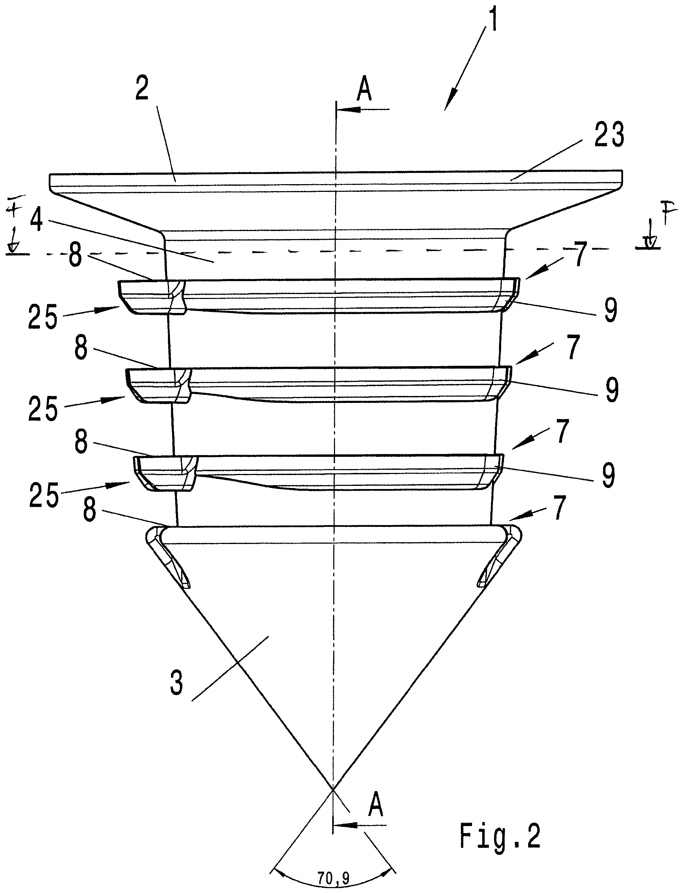

Insbesondere den Fig. 2 und 3 ist besonders gut zu entnehmen, dass die Außenkontur des Stifts 4 die eines Zylinders oder die eines Kegelstumpfs mit sehr geringer Neigung (Verjüngung in Richtung auf die Spitze 3) ist. Daraus ergibt sich - wie die Fig. 3 besonders deutlich hervorhebt -, dass die Radialerstreckung der jeweiligen Rippe 9, 10 (also das Maß, mit dem die jeweilige Rippe 9, 10 über den Außenumfang 20 des Stifts 4 in Radialrichtung zur Längsachse X übersteht) entlang der Längserstreckung (ihrer Erstreckung entlang des Bogens um die Längsachse X) variiert. Der Grund 26 der jeweiligen Ausnehmung zwischen der jeweiligen Rippe 9 und 10 ist ein Teil der Oberfläche des Außenumfangs des zylindrischen bzw. kegelstumpfförmigen Grundkörpers des Stifts 4.

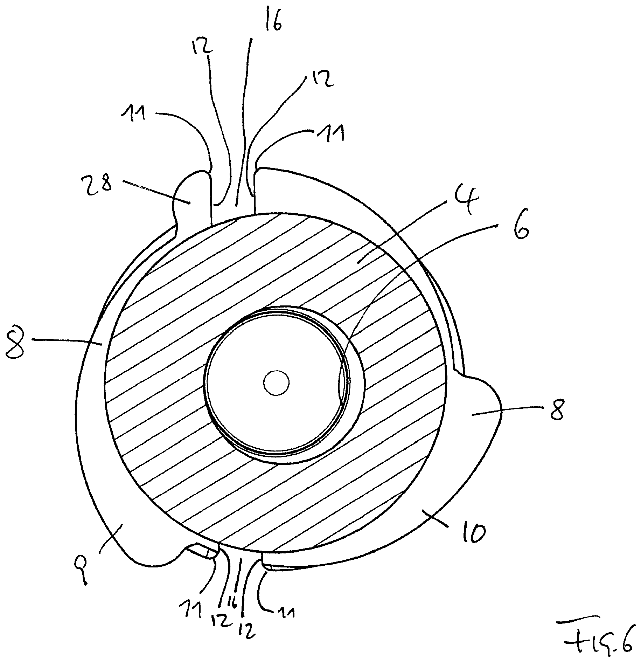

Die Fig. 6 zeigt, dass der Stift einen hohlzylindrischen Querschnitt hat.

Die Fig. 3 hebt hervor, dass die Höhe der jeweiligen Rippe 9, 10 an einem Punkt entlang ihrer Längserstreckung (ihrer Erstreckung entlang des Bogens um die Längsachse X) im Vergleich zu einer Rippe, die in Bezug auf die Spitze 3 näher zur Spitze 3 angeordnet ist, größer ist. Bei der Ausführungsform der Fig. 1 bis 6 ist die jeweilige Höhe der jeweiligen Rippe 9, 10 entlang ihrer Längserstreckung so gewählt, dass sich in jedem Schnitt des Halbzeugs 1, der auch die Längsachse X enthält und durch die Rippen 9, 10 führt, die Punkte der maximalen Erstreckung der jeweiligen Rippen 9, 10 auf Linien 21, 22 liegen, die einen Winkel von 12° zueinander bilden.

Wie der Fig. 4 und der Fig. 5 besonders gut zu entnehmen ist, sind die Rippen 10 jeweils gleichförmig ausgebildet und auch die Rippen 9 jeweils gleichförmig ausgebildet, womit gemeint ist, dass alle Rippen 10 die gleiche Form, wenn auch in unterschiedlicher Größe, und die Rippen 9 jeweils die gleiche Form, wenn auch in unterschiedlicher Größe, aufweisen.

Die Fig. 2 zeigt, dass die Spitze als Kegel ausgeführt ist, der einen eingeschlossenen Winkel von 70,9° aufweist.

Wie den Fig. 1 bis 5 gut zu entnehmen ist, weist der Kopf 1 einen umlaufenden Flansch 23 auf, mit dem das Halbzeug an anderen Elementen abgestützt werden kann.

Den Fig. 2 und 3 ist besonders gut zu entnehmen, dass die jeweilige Rippe 9, 10 eine die Haltefläche 8 ausbildende, dem Kopf 2 zugewandte Oberfläche aufweist, die im Winkel von 90° zu der Längsachse X verläuft und eine ebenfalls in einem Winkel von 90° zur Längsachse X verlaufende, der Spitze 3 zugewandte Unterseite 24 aufweist. Oberseite und Unterseite verlaufen mithin parallel zueinander. Die Oberseite und die Unterseite werden jeweils durch eine Umfangsfläche 25 verbunden. In Querschnitten des Halbzeugs, die die Längsachse X enthalten, verläuft die Umfangsfläche im Winkel zur Längsachse X (nicht parallel zur Längsachse und auch nicht 90° zur Längsachse). Man könnte davon sprechen, dass die Rippe an ihrem Außenumfang eine Fase aufweist.

Das Halbzeug 1 der Fig. 1 bis 6 ist als Spritzgussteil aus einem Kunststoff ausgeführt.

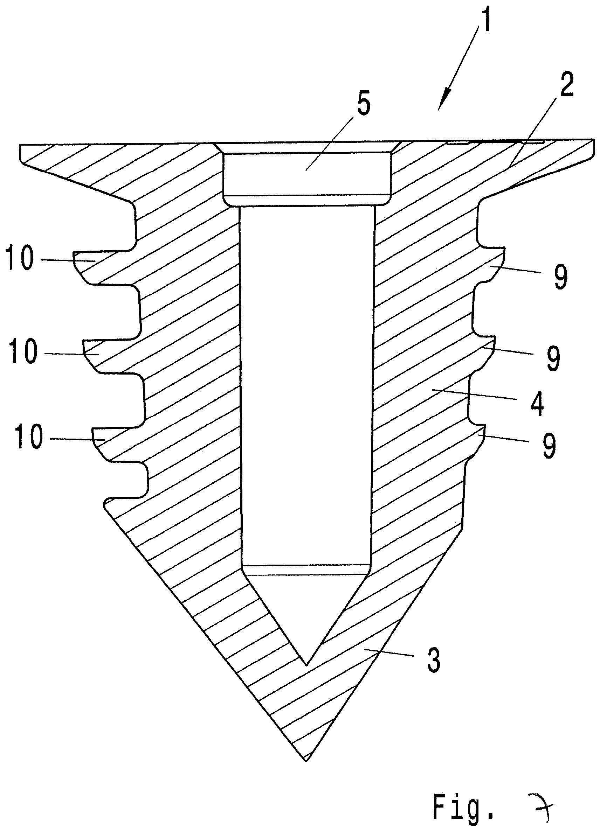

Die Ausführungsform gemäß Fig. 7 unterscheidet sich von der Ausführungsform gemäß der Fig. 1 bis 6 dadurch, dass in den Kopf 2 ein auch in den Stift 4 und bis in die Spitze 3 reichendes Befestigungsloch 5 ausgeführt ist, das glattwandig ausgeführt ist und nicht das Innengewinde 6 der Ausführungsform der Fig. 1 bis 6 aufweist.

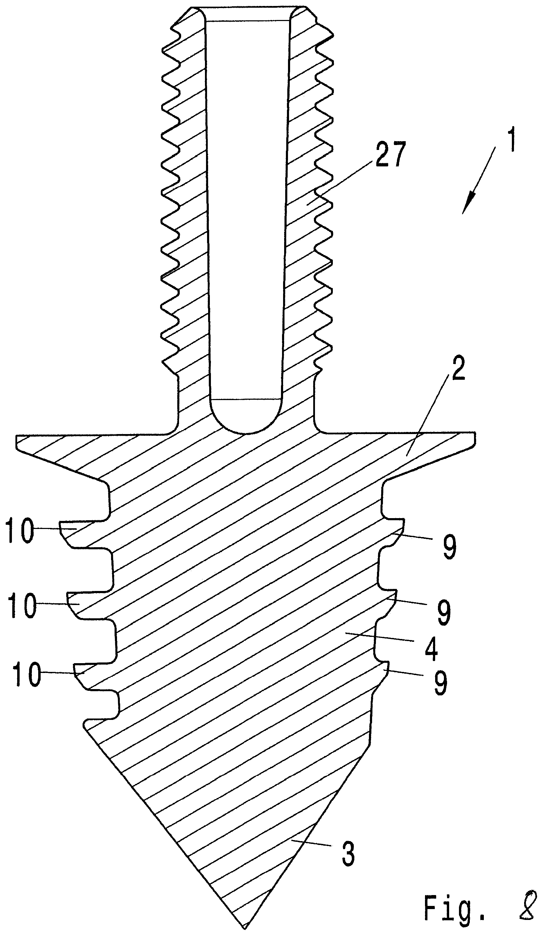

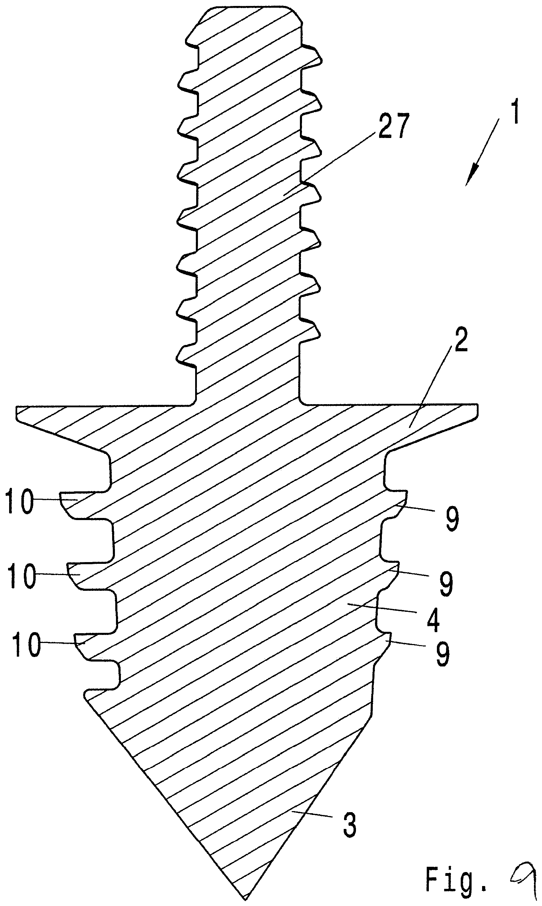

Bei den Ausführungsformen der Fig. 8 und 9 ist in dem Kopf 2 kein Befestigungsloch vorgesehen. Vielmehr ist an dem Kopf 2 jeweils ein Befestigungsvorsprung vorgesehen. Bei der Ausführungsform der Fig. 8 ist der Befestigungsvorsprung als sich entlang der Längsachse X erstreckender Gewindestift ausgeführt. Gleiches gilt für die Ausführungsform der Fig. 9. Im Unterschied zu dem auf Vollmaterial hergestellten Gewindestift 27 der Ausführungsform gemäß Fig. 9 ist bei der Ausführungsform gemäß Fig. 8 der Gewindestift hohl ausgeführt.

Aus Gründen der Übersichtlichkeit werden bei den Ausführungsformen der Fig. 7, 8 und 9 die gleichen Bezugszeichen verwendet wie bei der Ausführungsform der Fig. 1 bis 6. Mit Ausnahme der konkreten Ausgestaltung des Befestigungslochs, bzw. des Befestigungsvorsprungs sind die Halbzeuge 1 der Ausführungsformen der Fig. 7, 8, und 9 gleich zu der Ausführung des Ausführungsbeispiels der Fig. 1 bis 6.

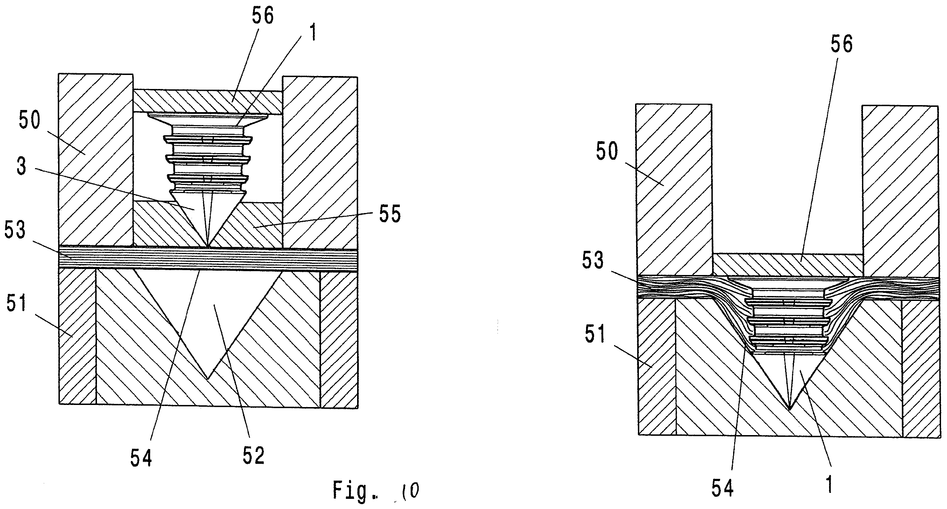

Die Fig. 10 zeigt schematisch den Ablauf eines Verfahrens zum Herstellen des erfindungsgemäßen Verbundelements 100. Hierfür wird eine Vorrichtung mit einem Oberteil 50, in dem ein erfindungsgemäßes Halbzeug 1 gehalten wird, vorgesehen. Ferner weist die eingesetzte Vorrichtung ein Unterteil 51 auf. In dem Unterteil 51 ist eine Kavität 52 ausgeführt, deren Form an die Form der Spitze 3 des Halbzeugs 1 angepasst ist. Zwischen dem Oberteil 50 und dem Unterteil 51 sind mehrere Lagen eines Gewebes 53 aus Fasern 54 eingespannt. Oberhalb des Gewebes 53 befindet sich im Oberteil 50 ein Harzvorrat 55. Die Spitze 3 des in dem Oberteil 50 gehaltenen Halbzeugs 1 taucht in den Harzvorrat 55 ein. Ferner ist ein Stempel 56 vorgesehen, der das Halbzeug 1 durch den Harzvorrat 55 in das Gewebe 53 drücken kann. Der Harzvorrat 55 ist zum Zeitpunkt des Einschiebens des Halbzeugs 1 verflüssigt. Das verflüssigte Harz des Harzvorrats 55 wird zusammen mit dem Halbzeug 1 durch den Stempel 56 zwischen die Fasern 54 des Gewebes 53 gedrückt. Die Spitze 3 des Halbzeugs 1 teilt die Fasern 54 des Gewebes 53. Dies kann zum einen dadurch erfolgen, dass die Spitze 3 die Fasern des Gewebes zur Seite schiebt. Ergänzend oder alternativ ist es auch denkbar, dass die Spitze 3 des Halbzeugs 1 die Fasern 54 trennt.

Nach dem Einschieben des Halbzeugs 1 wird das Harz ausgehärtet. Nach dem Aushärten des Harzes ist das erfindungsgemäße Verbundelement fertig hergestellt und kann der Vorrichtung entnommen werden. Das Halbzeug 1 ist dann zu einem in dem Harz des Verbundelements eingebundenen Einsatzstück 101 geworden. Da das Einsatzstück 101 aus dem Halbzeug 1 hergestellt wurde, weist das Einsatzstück 101 einen Kopf 102 und eine Spitze 103 auf, wobei zwischen dem Kopf 102 und der Spitze 103 ein Stift 104 vorgesehen ist, der sich entlang einer Längsachse X erstreckt, die vom Kopf 102 zur Spitze 103 weist. Das Einsatzstück 101 weist Rippen 109 auf, die von dem Stift 104 vorstehen.

Der vergrößerten Darstellung des erfindungsgemäßen Verbundelements in Fig. 10 ist besonders gut zu entnehmen, wie sich die Fasern 54 des Gewebes 53 zwischen die Rippen 109 legen. Im ausgehärteten Zustand des Harzes befindet sich das Harz ebenfalls zwischen den Rippen 109. Durch die Anordnung des Harzes und der Fasern 54 zwischen den Rippen 109 wird die Möglichkeit geschaffen, einem Herausziehen des Einsatzstücks 101 aus dem Verbundelement 100 hohe Haltekräfte entgegenzusetzen.

Durch die in den Fig. 4 und 5 besonders gut dargestellte variierende Höhe der Rippen 9 und 10, insbesondere aber auch durch die an den Rippen 9,10 vorgesehenen Absätze 11 und deren Abstützflächen 12 wird die Möglichkeit geschaffen, dem Versuch einer Rotation des Einsatzstücks 101 in dem ausgehärteten Harz besonders hohe Haltekräfte entgegenzusetzen. Das ermöglicht es beispielsweise, einen Gewindestift mit hohen Anzugskräften in ein Innengewinde 6 in einem Befestigungsloch 5 einzuschrauben.

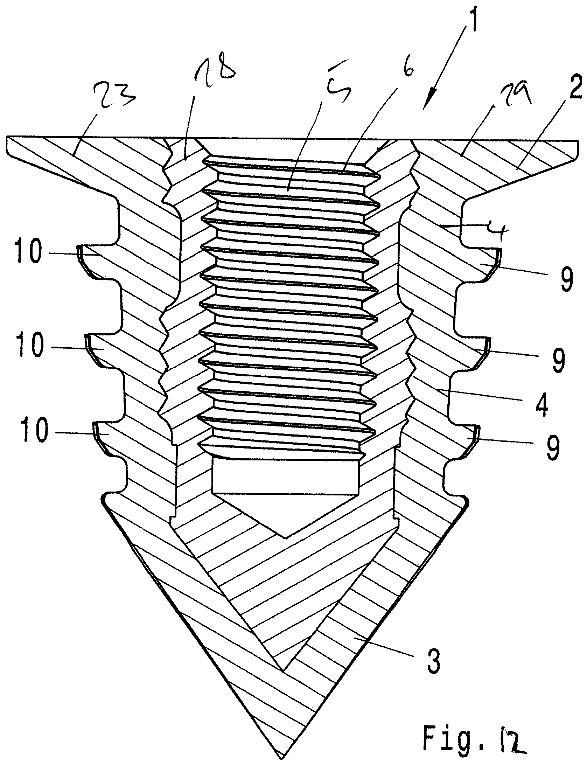

Die Fig. 12 zeigt eine Ausführungsform des erfindungsgemäßen Halbzeugs, bei dem eine das Befestigungsloch 5 und das in dem Befestigungsloch 5 vorgesehene Innengewinde 6 aufweisende Metallhülse 28 zur Bildung des erfindungsgemäßen Halbzeugs mit einer Kunststoffmasse 29 überspritzt wurde. Die Darstellung der Fig. 12 wurde an die Darstellungsart der Fig. 2 angelehnt, um zu zeigen, dass die in Fig. 12 dargestellte Ausführungsform sich von der in Fig. 2 dargestellten Ausführungsform lediglich hinsichtlich ihres Innenlebens, nämlich der innen angeordneten Metallhülse 28 unterscheidet, werden die Außenform des in Fig. 12 dargestellten Ausführungsbeispiels der des in Fig. 2 dargestellten Ausführungsbeispiels entspricht.

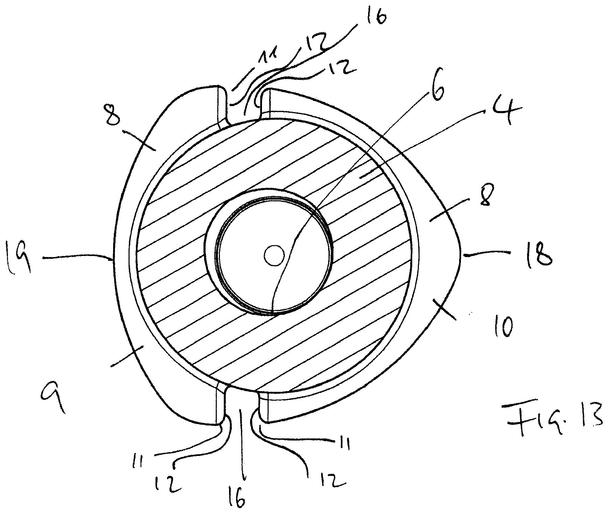

Die in Fig. 13 gezeigte Ausführungsform ist vergleichbar der in den Fig. 1 bis 6 dargestellten Ausführungsform ausgeführt; sie unterscheidet sich jedoch durch die Geometrie der Umfangsfläche der Rippen 9, 10. Während bei der Ausführungsform der Fig. 1 bis 6 die Umfangsfläche der Rippen 9, 10 mit Stufen und Haltezähnen ausgeführt ist, ist die Umfangsflache der Rippen 9, 10 des Ausführungsbeispiels der Fig. 13 einfacher ausgeführt. Zu erkennen ist in der Fig. 13 ebenfalls, dass sich die Höhe der jeweiligen Rippe 9, 10 entlang ihrer Längserstreckung (ihrer Erstreckung entlang des Bogens um die Längsachse X) stetig variiert. Mit Ausnahme der am jeweiligen Ende der Rippe 9, 10 vorgesehenen Absätze 11, weist die jeweilige Rippe 9, 10 keine Stufen auf. Die Rippe 10 weist einen Scheitelpunkt 18 auf, der prägnanter ausgebildet ist, als ein vergleichbarer Scheitelpunkt 19 der Rippe 9, aber auch an den Scheitelpunkten 18, 19 ist die Änderung der Höhe stetig ausgeführt. Die Scheitelpunkte 18, 19 sind nicht als Kanten ausgeführt.

## Patentansprüche

1. Verfahren zum Herstellen eines Verbundelements (100) mit in einem ausgehärteten Harz eingebundenen Fasern und einem ebenfalls in dem Harz eingebundenen Einsatzstück (101), das einen Kopf (102) und eine Spitze (103) aufweist und zwischen dem Kopf (102) und der Spitze (103) ein Stift (104) vorgesehen ist, der sich entlang einer Längsachse (X) erstreckt, die vom Kopf (102) zur Spitze (103) weist,
wobei ein Befestigungsloch in den Kopf (102) eingebracht ist und/oder an dem Kopf (102) ein Befestigungsvorsprung (27) vorgesehen ist,
wobei an dem Stift (104) ein Rücksprung vorgesehen ist, an dem eine im Winkel von >0° und <180°, insbesondere in einem Winkel von >10° und <170° zur Längsachse (X) stehende, dem Kopf (102) zugewandte Haltefläche ausgebildet ist,
wobei das Einsatzstück (101) aus einem Halbzeug (1) nach einem der Ansprüche 2 bis 7 hergestellt wurde, wobei
das Halbzeug (1) einen Kopf (2) und eine Spitze (3) aufweist und zwischen dem Kopf (2) und der Spitze (3) ein Stift (4) vorgesehen ist, der sich entlang einer Längsachse (X) erstreckt, die vom Kopf (2) zur Spitze (3) weist,
wobei ein Befestigungsloch (5) in den Kopf (2) eingebracht ist und/oder an dem Kopf (2) ein Befestigungsvorsprung (27) vorgesehen ist,
wobei an dem Stift (4) ein Rücksprung (7) vorgesehen ist, an dem eine im Winkel von >0° und <180°, insbesondere in einem Winkel von >10° und <170° zur Längsachse (X) stehende, dem Kopf (2) zugewandte Haltefläche (8) ausgebildet ist,
wobei das Halbzeug (1) mit Fasern und einem flüssigen Harz umgeben wird und das Harz ausgehärtet wird, in dem
• eine Vorrichtung mit einem Oberteil (50), in dem das Halbzeug (1) gehalten wird, vorgesehen wird, wobei die Vorrichtung ein Unterteil (51) aufweist und in dem Unterteil (51) eine Kavität (52) ausgeführt ist, deren Form an die Form der Spitze (3) des Halbzeugs (1) angepasst ist,
• zwischen dem Oberteil (50) und dem Unterteil (51) mehrere Lagen eines Gewebes (53) aus Fasern (54) eingespannt werden,
• sich oberhalb des Gewebes (53) im Oberteil (50) ein Harzvorrat 55 befindet,
• die Spitze (3) des in dem Oberteil (50) gehaltenen Halbzeugs (1) in den Harzvorrat (55) eintaucht,
• ein Stempel (56) vorgesehen ist, der das Halbzeug (1) durch den Harzvorrat (55) in das Gewebe (53) drücken kann,
• der Harzvorrat (55) zum Zeitpunkt des Einschiebens des Halbzeugs (1) verflüssigt ist,
• das verflüssigte Harz des Harzvorrats (55) zusammen mit dem Halbzeug (1) durch den Stempel (56) zwischen die Fasern (54) des Gewebes (53) gedrückt wird,
• die Spitze (3) des Halbzeugs (1) die Fasern (54) des Gewebes (53) teilt, wobei die Spitze (3) die Fasern des Gewebes zur Seite schiebt und/oder die Spitze (3) des Halbzeugs (1) die Fasern (54) trennt, und
• nach dem Einschieben des Halbzeugs (1) das Harz ausgehärtet wird.

2. Halbzeug (1) für das Herstellen eines faserverstärkten, ein Befestigungsloch (5) oder einen Befestigungsvorsprung aufweisenden Verbundelements (100), wobei das Halbzeug (1) einen Kopf (2) und eine Spitze (3) aufweist und zwischen dem Kopf (2) und der Spitze (3) ein Stift (4) vorgesehen ist, der sich entlang einer Längsachse (X) erstreckt, die vom Kopf (2) zur Spitze (3) weist,
wobei ein Befestigungsloch (5) in den Kopf (2) eingebracht ist und/oder an dem Kopf (2) ein Befestigungsvorsprung (27) vorgesehen ist,
wobei an dem Stift (4) ein Rücksprung (7) vorgesehen ist, an dem eine im Winkel von >0° und <180°, insbesondere in einem Winkel von >10° und <170° zur Längsachse (X) stehende, dem Kopf (2) zugewandte Haltefläche (8) ausgebildet ist,
**gekennzeichnet durch** zwei oder mehr Rippen (9,10), die sich von dem Stift (4) in eine Richtung von >0° und <180°, insbesondere in einem Winkel von >10° und <170° zur Längsachse (X) erstrecken und an denen jeweils eine der dem Kopf (2) zugewandten Halteflächen (8) ausgebildet ist, wobei die Rippen (9,10) in Richtung der Längsachse (X) beabstandet voneinander angeordnet sind.
wobei die Rippen (9,10) sich jeweils entlang eines Bogens um die Längsachse (X) erstrecken und
die Höhe der jeweiligen Rippe (9,10), womit dabei die Erstreckung der Rippe (9,10) in Richtung radial zur Längsachse (X) verstanden wird, über die Erstreckung der Rippe (9,10) variiert.

3. Halbzeug nach Anspruch 2, **dadurch gekennzeichnet, dass** die zwei oder mehr Rippen (9,10) jeweils einen Absatz (11) aufweisen, an dem eine Abstützfläche (12) ausgebildet ist, die eine Flächennormale (13) aufweist, die zumindest eine Komponente aufweist, die tangential zu einem Kreis (17) um die Längsachse (X) verläuft.

4. Halbzeug nach einem der Ansprüche 2 oder 3, **dadurch gekennzeichnet, dass** die Spitze (3) und/oder die Umfangsfläche des Kernquerschnittes des Stifts (4) und/oder die Umhüllende Mantelfläche die die Rippen (9,10) umspannt sich in Richtung der Längsachse (X) verjüngt.

5. Halbzeug nach einem der Ansprüche 2 bis 4, **dadurch gekennzeichnet, dass** ein Befestigungsloch (5) in den Kopf (2) eingebracht ist und das Befestigungsloch (5) sich bis in den Stift (4) erstreckt.

6. Halbzeug nach einem der Ansprüche 2 bis 5, **dadurch gekennzeichnet, dass** das Befestigungsloch (5) ein Gewinde (6) aufweist.

7. Halbzeug nach einem der Ansprüche 2 bis 6, **dadurch gekennzeichnet, dass** ein Befestigungsvorsprung am Kopf (2) vorgesehen ist und in Form einer Kugel, eines Stiftes mit Außengewinde oder Innengewinde, einem T-Bolzen ausgebildet ist.

8. Verwendung eines Halbzeug nach einem der Ansprüche 2 bis 7 zum Herstellen eines faserverstärkten, einen Befestigungsloch (5) oder einen Befestigungsvorsprung aufweisenden Verbundelements (100).

9. Verbundelement (100) mit in einem ausgehärteten Harz eingebundenen Fasern und einem ebenfalls in dem Harz eingebundenen Einsatzstück (101), das einen Kopf (102) und eine Spitze (103) aufweist und zwischen dem Kopf (102) und der Spitze (103) ein Stift (104) vorgesehen ist, der sich entlang einer Längsachse (X) erstreckt, die vom Kopf (102) zur Spitze (103) weist,
wobei ein Befestigungsloch in den Kopf (102) eingebracht ist und/oder an dem Kopf (102) ein Befestigungsvorsprung (27) vorgesehen ist,
wobei an dem Stift (104) ein Rücksprung vorgesehen ist, an dem eine im Winkel von >0° und <180°, insbesondere in einem Winkel von >10° und <170° zur Längsachse (X) stehende, dem Kopf (102) zugewandte Haltefläche ausgebildet ist **dadurch gekennzeichnet, dass** das Einsatzstück (101) aus einem Halbzeug (1) nach einem der Ansprüche 2 bis 7 hergestellt wurde.

## Claims

1. Method for manufacturing a composite element (100) with fibres embedded in a cured resin and an insert piece (101) also embedded in the resin, which has a head (102) and a point (103), and a pin (104) is provided between the head (102) and the point (103), the pin extending along a longitudinal axis (X), which points from the head (102) to the point (103),
wherein a mounting hole is made in the head (102) and/or a mounting projection (27) is provided on the head (102),
wherein a recess is provided on the pin (104), on which recess a retaining surface is formed facing the head (102) at an angle of >0° and <180°, in particular an angle of >10° and <170° to the longitudinal axis (X),
wherein the insert piece (101) was manufactured from a semi-finished product (1) according to one of claims 2 to 7, wherein
the semi-finished product (1) has a head (2) and a point (3), and a pin (4) is provided between the head (2) and the point (3), the pin extending along a longitudinal axis (X), which points from the head (2) to the point (3),
wherein a mounting hole (5) is made in the head (2) and/or a mounting projection (27) is provided on the head (2),
wherein a recess (7) is provided on the pin (4), on which recess a retaining surface (8) facing the head (2) is formed at an angle of >0° and <180°, in particular an angle of >10° and <170° to the longitudinal axis (X),
wherein the semi-finished product (1) is surrounded by fibres and a liquid resin, and the resin is cured, in which
• a device is provided with an upper part (50), in which the semi-finished product (1) is held, wherein the device has a lower part (51) and a cavity (52) is made in the lower part (51), the shape of the cavity matching the shape of the point (3) of the semi-finished product (1),
• several layers of a fabric (53) of fibres (54) are stretched between the upper part (50) and the lower part (51),
• a supply of resin 55 is situated above the fabric (53) in the upper part (50),
• the point (3) of the semi-finished product (1) held in the upper part (50) dips into the supply of resin (55),
• a die (56) is provided, which can press the semi-finished product (1) through the supply of resin (55) into the fabric (53),
• the supply of resin (55) is liquefied at the moment the semi-finished product (1) is pushed in,
• the liquefied resin of the supply of resin (55) together with the semi-finished product (1) is pressed by the die (56) between the fibres (54) of the fabric (53),
• the point (3) of the semi-finished product (1) divides the fibres (54) of the fabric (53), wherein the point (3) pushes the fibres of the fabric aside and/or the point (3) of the semi-finished product (1) separates the fibres (54), and
• the resin is cured after the semi-finished product (1) is pushed in.

2. Semi-finished product (1) for manufacturing a fibre-reinforced composite element (100) having a mounting hole (5) or a mounting projection, wherein the semi-finished product (1) has a head (2) and a point (3), and a pin (4) is provided between the head (2) and the point (3), the pin extending along a longitudinal axis (X), which points from the head (2) to the point (3),
wherein a mounting hole (5) is made in the head (2) and/or a mounting projection (27) is provided on the head (2),
wherein a recess (7) is provided on the pin (4), on which recess a retaining surface (8) facing the head (2) is formed at an angle of >0° and <180°, in particular an angle of >10° and <170° to the longitudinal axis (X),
**characterised by** two or more ribs (9, 10), which extend from the pin (4) in a direction of >0° and <180°, in particular an angle of >10° and <170° to the longitudinal axis (X) and to each of which a retaining surface (8) facing the head (2) is formed, wherein the ribs (9, 10) are respectively arranged in the direction of the longitudinal axis (X) at a distance from each other,
wherein the ribs (9, 10) extend respectively along an arc around the longitudinal axis (X), and
the height of the respective ribs (9, 10), whereby the extension of the ribs (9, 10) in a direction radial to the longitudinal axis (X) is understood by that, varies along the extension of the ribs (9, 10).

3. Semi-finished product according to claim 2, **characterised in that** the two or more ribs (9, 10) respectively have a shoulder (11) on which a support surface (12) is formed, which has a surface normal (13) having at least one component, which extends tangential to a circle (17) around the longitudinal axis (X).

4. Semi-finished product according to one of claims 2 or 3, **characterised in that** the point (3) and/or the circumferential surface of the core section of the pin (4) and/or the encasing surface area that encompasses the ribs (9, 10) tapers in the direction of the longitudinal axis (X).

5. Semi-finished product according to one of claims 2 to 4, **characterised in that** the head (2) comprises a mounting hole (5) and the mounting hole (5) extends into the pin (4).

6. Semi-finished product according to one of claims 2 to 5, **characterised in that** the mounting hole (5) has a thread (6).

7. Semi-finished product according to one of claims 2 to 6, **characterised in that** a mounting projection is provided on the head (2) and is formed to a T-bolt in the shape of a ball, a pin with an outside thread or inside thread.

8. Use of a semi-finished product according to one of claims 2 to 7 for manufacturing a fibre-reinforced composite element (100) having a mounting hole (5) or a mounting projection.

9. Composite element (100) with fibres embedded in a cured resin and an insert piece (101) also embedded in the resin, which has a head (102) and a point (103), and a pin (104) is provided between the head (102) and the point (103), the pin extending along a longitudinal axis (X), which points from the head (102) to the point (103),
wherein a mounting hole is made in the head (102) and/or a mounting projection (27) is provided on the head (102),
wherein a recess is provided on the pin (104), on which recess a retaining surface is formed facing the head (102) at an angle of >0° and <180°, in particular an angle of >10° and <170° to the longitudinal axis (X),
**characterised in that** the insert piece (101) was manufactured from a semi-finished product (1) according to one of claims 2 to 7.

## Revendications

1. Procédé de fabrication d'un élément composite (100) avec des fibres incorporées dans une résine durcie et un insert (101) également incorporé dans la résine, celui-ci présentant une tête (102) et une pointe (103), et une tige (104) étant prévue entre la tête (102) et la pointe (103), la celle-ci s'étendant le long d'un axe longitudinal (X) orienté de la tête (102) vers la pointe (103),
dans lequel un trou de fixation est pratiqué dans la tête (102) et/ou une partie saillante de fixation (27) est prévue sur la tête (102),
dans lequel une partie de retrait est prévue sur la tige (104), sur laquelle est formée une surface de maintien orientée vers la tête (102) et formant un angle >0° et <180°, en particulier un angle >10° et <170° avec l'axe longitudinal (X),
dans lequel l'insert (101) a été fabriqué à partir d'un produit semi-fini (1) selon l'une des revendications 2 à 7, le produit semi-fini (1) présentant une tête (2) et une pointe (3) et une tige (4) étant prévue entre la tête (2) et la pointe (3), celle-ci s'étendant le long d'un axe longitudinal (X) orienté de la tête (2) vers la pointe (3),
dans lequel un trou de fixation (5) est pratiqué dans la tête (2) et/ou une partie saillante de fixation (27) est prévue sur la tête (2),
dans lequel une partie de retrait (7) est prévue sur la tige (4), sur laquelle est formée une surface de maintien (8) orientée vers la tête (2) et formant un angle >0° et <180°, en particulier un angle >10° et <170° par rapport à l'axe longitudinal (X),
dans lequel le produit semi-fini (1) est entouré de fibres et d'une résine liquide, et la résine est durcie, dans lequel
• est prévu un dispositif avec une partie supérieure (50), dans laquelle le produit semi-fini (1) est maintenu, le dispositif présentant une partie inférieure (51) et une cavité (52) étant réalisée dans la partie inférieure (51), dont la forme est adaptée à la forme de la pointe (3) du produit semi-fini (1),
• plusieurs couches d'un tissu (53) de fibres (54) sont tendues entre la partie supérieure (50) et la partie inférieure (51),
• une réserve de résine 55 se trouve au-dessus du tissu (53) dans la partie supérieure (50),
• la pointe (3) du produit semi-fini (1) maintenu dans la partie supérieure (50) plonge dans la réserve de résine (55),
• un poinçon (56) est prévu, qui peut presser le produit semi-fini (1) à travers la réserve de résine (55) dans le tissu (53),
• la réserve de résine (55) est liquéfiée au moment de l'insertion du produit semi-fini (1),
• la résine liquéfiée de la réserve de résine (55) est pressée avec le produit semi-fini (1) par le poinçon (56) entre les fibres (54) du tissu (53),
• la pointe (3) du produit semi-fini (1) divise les fibres (54) du tissu (53), la pointe (3) poussant les fibres du tissu sur le côté et/ou la pointe (3) du produit semi-fini (1) séparant les fibres (54), et
• la résine est durcie après l'insertion du produit semi-fini (1).

2. Produit semi-fini (1) pour la fabrication d'un élément composite (100) renforcé par des fibres et présentant un trou de fixation (5) ou une partie saillante de fixation, le produit semi-fini (1) présentant une tête (2) et une pointe (3) et une tige (4) étant prévue entre la tête (2) et la pointe (3), celle-ci s'étendant le long d'un axe longitudinal (X) orienté de la tête (2) vers la pointe (3),
dans lequel un trou de fixation (5) est pratiqué dans la tête (2) et/ou une partie de saillie de fixation (27) est prévue sur la tête (2),
dans lequel une partie de retrait (7) est prévue sur la tige (4), sur laquelle est formée une surface de maintien (8) orientée vers la tête (2) et formant un angle >0° et <180°, en particulier un angle >10° et <170° par rapport à l'axe longitudinal (X),
**caractérisé par** deux ou plusieurs nervures (9, 10) qui s'étendent depuis la tige (4) dans une direction de >0° et <180°, en particulier un angle >10° et <170° par rapport à l'axe longitudinal (X) et sur lesquelles est formée respectivement l'une des surfaces de maintien (8) orientée vers la tête (2), les nervures (9, 10) étant disposées à distance les unes des autres dans la direction de l'axe longitudinal (X),
les nervures (9, 10) s'étendant respectivement le long d'un arc autour de l'axe longitudinal (X) et
la hauteur de la nervure respective (9, 10), par laquelle on entend ici l'extension de la nervure (9, 10) dans la direction radiale par rapport à l'axe longitudinal (X), varie sur l'extension de la nervure (9, 10).

3. Produit semi-fini selon la revendication 2, **caractérisé en ce que** les deux ou plusieurs nervures (9, 10) présentent chacune un épaulement (11), sur lequel est formée une surface d'appui (12) qui présente une normale à la surface (13), laquelle présente au moins une composante qui s'étend tangentiellement à un cercle (17) autour de l'axe longitudinal (X).

4. Produit semi-fini selon l'une des revendications 2 ou 3, **caractérisé en ce que** la pointe (3) et/ou la surface périphérique de la section transversale du noyau de la tige (4) et/ou la surface d'enveloppe entourant les nervures (9, 10) se rétrécit en direction de l'axe longitudinal (X).

5. Produit semi-fini selon l'une des revendications 2 à 4, **caractérisé en ce qu'**un trou de fixation (5) est pratiqué dans la tête (2) et **en ce que** le trou de fixation (5) s'étend jusque dans la tige (4).

6. Produit semi-fini selon l'une des revendications 2 à 5, **caractérisé en ce que** le trou de fixation (5) présente un filetage (6).

7. Produit semi-fini selon l'une des revendications 2 à 6, **caractérisé en ce qu'**une partie saillante de fixation est prévue sur la tête (2) et formée comme une bille, une tige avec un filetage extérieur ou un filetage intérieur, un boulon en T.

8. Utilisation d'un produit semi-fini selon l'une des revendications 2 à 7 pour la fabrication d'un élément composite (100) renforcé par des fibres et présentant un trou de fixation (5) ou une partie saillante de fixation.

9. Élément composite (100) avec des fibres incorporées dans une résine durcie et un insert (101) également incorporé dans la résine, celui-ci présentant une tête (102) et une pointe (103), et une tige (104) étant prévue entre la tête (102) et la pointe (103), celle-ci s'étendant le long d'un axe longitudinal (X) orienté de la tête (102) vers la pointe (103),
dans lequel un trou de fixation est pratiqué dans la tête (102) et/ou une partie saillante de fixation (27) étant prévue sur la tête (102),
dans lequel une partie de retrait est prévue sur la tige (104), sur laquelle est formée une surface de maintien orientée vers la tête (102) et formant un angle >0° et <180°, en particulier un angle >10° et <170° par rapport à l'axe longitudinal (X), **caractérisé en ce que** l'insert (101) a été fabriqué à partir d'un produit semi-fini (1) selon l'une des revendications 2 à 7.
